(19) Europäisches Patentamt
European Patent Office
Office européen des brevets

(11) **EP 4 062 764 B1**

(12) **EUROPEAN PATENT SPECIFICATION**

(45) Date of publication and mention
of the grant of the patent:
**18.06.2025   Bulletin 2025/25**

(21) Application number: **20903657.3**

(22) Date of filing: **27.01.2020**

(51) International Patent Classification (IPC):
*A23K 50/40* (2016.01)      *A23K 10/20* (2016.01)
*A23K 10/30* (2016.01)      *A23K 20/147* (2016.01)
*A23K 20/158* (2016.01)      *A23K 40/10* (2016.01)
*A23K 40/25* (2016.01)      *A23K 40/30* (2016.01)
*A23K 50/42* (2016.01)      *A23K 50/45* (2016.01)

(52) Cooperative Patent Classification (CPC):
**A23K 10/30; A23K 10/20; A23K 20/147;
A23K 20/158; A23K 40/10; A23K 40/25;
A23K 40/30; A23K 50/42; A23K 50/45;**
A23K 20/163; A23K 20/174

(86) International application number:
**PCT/JP2020/002759**

(87) International publication number:
**WO 2021/124593 (24.06.2021 Gazette 2021/25)**

(54) **PET FOOD**

HAUSTIERFUTTER

ALIMENT POUR ANIMAUX DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.12.2019  JP 2019227639**

(43) Date of publication of application:
**28.09.2022   Bulletin 2022/39**

(73) Proprietor: **Unicharm Corporation
Shikokuchuo-shi, Ehime 799-0111 (JP)**

(72) Inventors:
• **SAKODA, Junya
Itami-shi, Hyogo 664-0831 (JP)**
• **YOSHIGA, Fumisato
Itami-shi, Hyogo 664-0831 (JP)**
• **SAKAGUCHI, Tomoko
Itami-shi, Hyogo 664-0831 (JP)**

(74) Representative: **Dolleymores
9 Rickmansworth Road
Watford, Hertfordshire WD18 0JU (GB)**

(56) References cited:
JP-A- 2014 193 143      JP-A- 2015 012 809
JP-A- 2017 508 450      US-A1- 2012 028 891

• LINZ AMANDA L ET AL: "Feeding of soy protein isolate to rats during pregnancy and lactation suppresses formation of aberrant crypt foci in their progeny's colons: interaction of diet with fetal alcohol exposure", JOURNAL OF CARCINOGENESIS, BIOMED CENTRAL, LONDON, GB, vol. 3, no. 1, 15 October 2004 (2004-10-15), pages 14, XP021008691, ISSN: 1477-3163, DOI: 10.1186/1477-3163-3-14
• NIKAWA TAKESHI ET AL: "Effects of a Soy Protein Diet on Exercise-Induced Muscle Protein Catabolism in Rats", NUTRITION, vol. 18, no. 6, 1 June 2002 (2002-06-01), pages 490 - 495, XP055982144

- AOYAMA T ET AL: "SOY PROTEIN ISOLATE AND ITS HYDROLYSATE REDUCE BODY FAT OF DIETARY OBESE RATS AND GENETICALLY OBESE MICE (YELLOW KK)", NUTRITION, ELSEVIER, AMSTERDAM, NL, vol. 16, no. 5, 1 May 2000 (2000-05-01), pages 349 - 354, XP001157216, ISSN: 0899-9007, DOI: 10.1016/S0899-9007(00)00230-6
- KAZUHLSA ET AL: "Comparative Effect of Isolated Soybean Protein and Casein on Body Fat Deposition in Chicks", JPN. POULT. SCI, vol. 37, 1 January 2000 (2000-01-01), pages 365 - 371, XP055836753, Retrieved from the Internet <URL:https://www.jstage.jst.go.jp/article/jpsa1964/37/6/37_6_365/_pdf/-char/en>
- REEVES PHILIP G ET AL: "AIN-93 purified diets for laboratory rodents: Final report of the American Institute of Nutrition ad hoc writing committee on the reformulation of the AIN-76A rodent diet", THE JOURNAL OF NUTRITION, AMERICAN SOCIETY FOR NUTRITION, US, vol. 123, no. 11, 1 January 1993 (1993-01-01), pages 1939 - 1951, XP002440342, ISSN: 0022-3166
- "Comparative Effect of Isolated Soybean Protein and Casein on Body Fat Deposition in Chicks", JPN. POULT. SCI, 2000, pages 365 - 371, XP055836753
- TOYOKO OKUDA, REIKO HLGASHINAKA, HLROKO MLYOSHI, HIDEO KOISHI: "The effects of the soy protein isolate on cholesterol concentration in plasma of rats", ANNUAL REPORT OF HUMAN LIFE SCIENCE, no. 34, 1 January 1986 (1986-01-01), JP , pages 17 - 22, XP009536846, ISSN: 0385-8642

**Description**

FIELD

The present invention relates to a pet food.

BACKGROUND

In recent years, obesity of pets is causing troubles. Obesity refers to a physical state in which an intake energy is more excessive than a consumed energy and body fat is excessively accumulated. When the body fat is excessively accumulated, there is a risk that various diseases, such as diabetes, hypertension, hyperlipidemia, and arteriosclerosis may be caused.

Therefore, for health maintenance of pets, it is important to appropriately control a body fat mass to prevent or eliminate obesity. In addition, in a case of decreasing the body fat mass of the pet, it is important to prevent the decrease of a muscle mass of the pet.

In a case where the feeding amount (intake) of pet foods is decreased for the purpose of losing body weight, the feeding amount (intake) of protein decreases therewith, and thus the muscle mass may decrease as well as the body fat mass. On the other hand, in a case where the lipid mass in the pet food is decreased and the protein mass in the pet food is increased in order to suppress intake calories, there is a problem on nutrition balance, such as a load to the kidneys because the basic ingredient as a protein source contains a large amount of phosphorus. Furthermore, in a case where the fat or carbohydrate mass in the pet food is decreased while the protein mass in the pet food is maintained, the nutrition balance of the pet food is poor as the comprehensive nutritional diet. In addition, in a case where the lipid mass in the pet food is decreased and the dietary fiber mass in the pet food is increased while the protein mass in the pet food is maintained, there is a problem that the feeding of the pet food for a long time continuously is difficult due to a deterioration in palatability or the like.

Patent Literature 1 discloses a semi-moist pet food having a water content of 25 to 55 mass%, the pet food containing a defatted soybean and having a weight loss effect while suppressing the decrease in muscle mass.

In addition, Patent Literature 2 discloses a pet food capable of preventing obesity of a pet by adding a fat-burning amino acid.

[CITATION LIST]

[PATENT LITERATURE]

Patent Literature 1: Japanese Unexamined Patent Application Publication No.2016-052287
Patent Literature 2: Japanese Unexamined Patent Application Publication No.2005-040059
Patent Literature 3: US 2012/028891 A1 discloses a composition for maintaining an anabolic state in a female animal, wherein a protein source in the composition comprises soybean meal.

[NON-PATENT LITERATURE]

Non-patent literature 1: AOYAMA T ET AL: "SOY PROTEIN ISOLATE AND ITS HYDROLYSATE REDUCE BODY FAT OF DIETARY OBESE RATS AND GENETICALLY OBESE MICE (YELLOW KK)", NUTRITION, vol. 16, no. 5, 1 May 2000 (2000-05-01), pages 349-354, XP001157216, ISSN: 0899-9007, DOI: 10.1 016/S0899-9007(00)00230-6

Non-patent literature 2: REEVES PHILIP G ET AL: "AIN-93 purified diets lor laboratory rodents: Final report of the American Institute of Nutrition ad hoc writing committee on the reformulation of the AIN-76A rodent diet", THE JOURNAL OF NUTRITION, vol. 123, no. 11 , 1 January 1993 (1993-01-01), pages 1939-1951 , XP002440342, ISSN: 0022-3166

Non-patent literature 3: Nikawa Takeshi ET AL: "Effects of a Soy Protein Diet on Exercise-Induced Muscle Protein Catabolism in Rats", Nutrition, vol. 18, no. 6, 1 June 2002 (2002-06-01), pages 490-495, XP055982144

Non-patent literature 4: KAZUHLSA ET AL: "Comparative Effect of Isolated Soybean Protein and Casein on Body Fat

## EP 4 062 764 B1

Deposition in Chicks", JPN. POULT. SCI, vol. 37, 1 January 2000 (2000-01-01), pages 365-371, XP055836753

Non-patent literature 1 discloses the results of a study examining the effects of soy protein isolate on the rate of body-fat disappearance in dietary obese and genetically obese rodents.

Non-patent literature 2 discloses a formulation of purified diets for laboratory rodents.

Non-patent literature 3 discloses a study into the effects of dietary soy protein isolate on exercise-induced muscle protein catabolism in rats.

Non-patent literature 4 discloses a study of the comparative effect of isolated soybean protein and casein on body fat deposition in chicks.

SUMMARY

[TECHNICAL PROBLEM]

In a case where unpurified a plant-based ingredient (defatted soybean) is used as in the pet food disclosed in Patent Literature 1, the digestion of proteins is inhibited by protease inhibitors naturally contained in plants. Therefore, a pet fed with a pet food disclosed in Patent Literature 1 cannot efficiently absorb amino acids constituting the protein into the body, and there is a risk that the intake of amino acids for reforming into body proteins (muscles) decreases.

In addition, the amino acid itself added to the pet food disclosed in Patent Literature 2 is a kind of a food additive. Therefore, the pet food to which the amino acid itself is added is a pet food containing a food additive, which has not so good image of safety and health for consumers who purchase the pet food and in which high appeal cannot be expected. In addition, in the pet food for dogs disclosed in Patent Literature 2, only alanine, proline, lysine, or arginine alone or mixture thereof among amino acids are added, and there is a risk that the amount of essential amino acids in the dog is insufficient for diminishing loss of muscle mass during controlling body weight, which may make it impossible to maintain the muscle mass, that is, may lose the muscle mass.

The present invention was achieved in light of the above-described circumstances, and an object of the present invention is to provide a weight-control pet food capable of diminishing loss of muscle mass while decreasing the body fat mass by containing a basic ingredient as a protein source derived from a plant.

[SOLUTION TO PROBLEM]

The present invention provides a pet food as claimed in claim 1.

[ADVANTAGEOUS EFFECT OF THE INVENTION]

According to the present invention, a pet food capable of controlling body weight while diminishing loss of muscle mass and contains a basic ingredient as a plant-based protein source, can be provided.

BRIEF DESCRIPTION OF DRAWINGS

FIG. 1 is a graph illustrating results relating to Evaluation 2 (Evaluation of the amount of amino acids in blood) of Examples.
FIG. 2 is a graph illustrating results relating to Evaluation 2 (Evaluation of the amount of amino acids in blood) of Examples.
FIG. 3 is a graph illustrating results relating to Evaluation 2 (Evaluation of the amount of amino acids in blood) of Examples.
FIG. 4 is a graph illustrating results relating to Evaluation 2 (Evaluation of the amount of amino acids in blood) of Examples.
FIG. 5 is a graph illustrating results relating to Evaluation 2 (Evaluation of the amount of amino acids in blood) of Examples.
FIG. 6 is a graph illustrating results relating to Evaluation 2 (Evaluation of the amount of amino acids in blood) of Examples.
FIG. 7 is a graph illustrating results relating to Evaluation 2 (Evaluation of the amount of amino acids in blood) of Examples.
FIG. 8 is a graph illustrating results relating to Evaluation 2 (Evaluation of the amount of amino acids in blood) of Examples.

FIG. 9 is a graph illustrating results relating to Evaluation 2 (Evaluation of the amount of amino acids in blood) of Examples.

FIG. 10 is a graph illustrating results relating to Evaluation 2 (Evaluation of the amount of amino acids in blood) of Examples.

FIG. 11 is a graph illustrating results relating to Evaluation 2 (Evaluation of the amount of amino acids in blood) of Examples.

FIG. 12 is a graph illustrating results relating to Evaluation 2 (Evaluation of the amount of amino acids in blood) of Examples.

FIG. 13 is a graph illustrating results relating to Evaluation 2 (Evaluation of the amount of amino acids in blood) of Examples.

FIG. 14 is a graph illustrating results relating to Evaluation 2 (Evaluation of the amount of amino acids in blood) of Examples.

FIG. 15 is a graph illustrating results relating to Evaluation 2 (Evaluation of the amount of amino acids in blood) of Examples.

DESCRIPTION OF EMBODIMENTS

In the present specification, the term "pet" refers to an animal raised by a person. In a narrower sense, pets are animals that are kept and loved by their owners. In addition, the term "pet food" refers to feed for pets. A pet food according to the present invention can be sold as an "animal feed" or "animal food". The pet food of the present invention is eaten by various animals, but is preferred by cats and dogs, particularly dogs. Pet foods can be classified into a comprehensive nutritional diet fed as a normal diet, an in-between meal snack fed as a snack, a therapeutic diet containing a specific component used for a pet having a disease, and other purpose diets, but it is appropriate that the pet food of the present invention is a comprehensive nutritional diet.

In the present specification, the term "lean body mass" is an index related to the body weight obtained by subtracting the body fat mass from the total body weight of the pet and is acquired by the following calculation equation. Further, the "lean body mass rate" can be acquired by setting the total weight of the individual as 100% and performing calculation by subtracting the body fat percentage from 100%.

$$\text{Lean body mass (kg)} = \text{total body weight (kg)} - \text{body fat mass (kg)}$$

$$\text{Body fat percentage (\%)} = 100 \times \text{body fat mass (kg)/total body weight (kg)}$$

$$\text{Lean body mass rate (\%)} = 100\% - \text{body fat percentage (\%)}$$

<Pet food>

The pet food according to the present embodiment is a weight-control pet food that is used for the purpose of controlling body weight while diminishing loss of muscle mass, and the pet food has the water content of less than 25% and has the protein content of 20 mass% or more in terms of dry matter and the isolated soybean protein content of 5 to 30 mass% in terms of dry matter with respect to the total mass of the pet food, as claimed.

<<Body weight control>>

The pet food according to the present embodiment is a weight-control pet food used for controlling body weight while diminishing loss of muscle mass.

The pet food according to the present embodiment is a pet food capable of diminishing loss of muscle mass in addition to reducing the body fat mass. That is, the pet food according to the present embodiment is a pet food capable of maintaining a lean body mass rate while reducing the body fat percentage. In this matter, a breeder can control the body weight of a pet by daily feeding the pet food to the pet.

<<Water content>>

The pet food according to the present embodiment has a water content of less than 25%. Pet foods are roughly divided into a dry food with a water content of about 10%, a soft food with a water content of about 15% to 35%, and a wet food with a water content of about 80%, as classification according to water content.

In a case where the water content of the pet food according to the present embodiment is less than 25%, the storage period of the pet food is relatively long and the odor of the pet food can be suppressed, which makes it easier for the breeder to handle the pet food.

The water content of the pet food according to the present embodiment is preferably less than 20%, more preferably less than 15%, and still more preferably less than 10%.

<<Protein content>>

The pet food according to the present embodiment has a protein content of 20 mass% or more in terms of dry matter with respect to the total mass of the pet food. According to the above-described configuration, a larger amount of proteins necessary for muscle synthesis can be fed to a pet while satisfying the nutrients of pet food as a comprehensive nutritional diet. In the pet food according to the present embodiment, the protein content is preferably 24 mass% or more in terms of dry matter, more preferably 31 mass% or more in terms of dry matter, with respect to the total mass of the pet food.

A basic ingredient as a protein source is roughly divided into a basic ingredient as an animal-based protein source derived from an animal and a basic ingredient as a plant-based protein source derived from a plant, and the proteins in pet food are derived from these basic ingredients. Specific examples of the basic ingredient as an animal-based protein source include chicken meal, pork meal, and beef meal. The basic ingredient as an animal-based protein source is difficult to be adjusted as a basic ingredient as a protein source because the inedible parts (bones containing a large amount of minerals, internal organs, and the like) are heat-treated and degreased, and then dried and powdered.

Specific examples of the basic ingredient as a plant-based protein source include a soybean protein isolate, a defatted soybean, corn gluten meal, and wheat gluten.

<<Soybean protein isolate>>

The soybean protein isolate is obtained as follows: acid is added to soybean milk, which is obtained after defatting soybeans and extraction with water, to obtain whey and curd; and the curd portion is fractionated by centrifugal separation or a filter, neutralized, dried, and ground. The soybean protein isolate has a higher protein content than a soy protein concentrate. 99.9% of the soybean protein isolate is formed of protein components, and the soy protein isolate contains almost no protease inhibitor that is an inhibitory factor of protein digestion. The soybean protein isolate is displayed as "soy protein" in the raw material indication of the product, and the name of the raw material indication is different from that of other soybean products (including defatted soybeans). "Soy protein" has a similar amino acid balance to a protein derived from an animal, but contains less minerals than a basic ingredient as an animal-based protein source and almost no oil and fat, thus the nutrition is easily designed.

The soybean protein isolate contains almost no protease inhibitor and thus the digestion of proteins contained in pet food is not inhibited.

In the present embodiment, the lower limit value of the isolated soybean protein content is 5 mass% or more in terms of dry matter. The lower limit value of the isolated soybean protein content is more preferably 10 mass% or more in terms of dry matter, and still more preferably 12 mass% or more in terms of dry matter. The upper limit value of the isolated soybean protein content 30 mass% or less in terms of dry matter. The upper limit value of the isolated soybean protein content is more preferably 25 mass% or less in terms of dry matter, still more preferably 20 mass% or less in terms of dry matter. According to the above-described composition, amino acid balance can be adjusted.

In the pet food according to the present embodiment, a content of $\beta$-conglycinin is preferably 5 mass % to 10 mass % in terms of dry matter, is more preferably 7.0 mass % to 10 mass % in terms of dry matter, and is even more preferably 8.0 mass % to 10.0 mass % in terms of dry matter. In a case where the content of $\beta$-conglycinin is equal to or more than the lower limit value of the above range, the digestibility of proteins is easily improved and absorption into the body as an amino acid is promoted advantageously.

$\beta$-Conglycinin is one of three proteins constituting the soybean protein. The soybean protein consists of three constituents: glycinin, $\beta$-conglycinin, and LP (protein associated with lipid). A content of the soybean protein can be calculated by a content of $\beta$-conglycinin.

For example, when a soybean protein isolate with about 100% (99.9%) of soybean protein is analyzed, it became clear that about 40% of $\beta$-conglycinin is contained. It is reported in Function and Science of Soybeans. 2012. pp. 31 (authors: Tomotada ONO, Makoto SHIMOYAMADA, and Koji MURAMOTO) that in a soybean protein isolate, a content of 7S protein ($\beta$-conglycinin + $\gamma$-conglycinin + basic 7S globulin) is 41%, a content of 2S protein ($\alpha$-conglycinin) is 16%, a content of 11S protein (glycinin) is 31%, and a content of 15S protein is 3%. Furthermore, by analysis by electrophoresis, it was found that a content of $\beta$-conglycinin was 27.8% with respect to a total mass of the soybean protein isolate.

<<Lipid content>>

In the pet food according to the present embodiment, the lipid content is preferably 5.5 to 30.0 mass% in terms of dry matter with respect to the total mass of the pet food.

According to the above-described configuration, the body weight of the pet can be reduced without reducing the lipid content of the pet food as in the therapeutic diet. Further, according to the above-described configuration, the body weight and body fat of the pet can be reduced while diminishing the reduction of the lean body mass.

In the pet food according to the present embodiment, the lipid content is more preferably 5.5 to 20.0 mass% in terms of dry matter, still more preferably 5.5 to 15.0 mass%, with respect to the total mass of the pet food.

<<Trypsin inhibitor>>

In the pet food according to the present embodiment, the mass of the trypsin inhibitor is 1.3 TIU/mg or less in terms of dry matter with respect to the total mass of the pet food.

Trypsin inhibitor is one of the factors that inhibit an enzyme that decomposes proteins (proteolytic enzyme) and is a factor that influences the digestibility of amino acids constituting the proteins. Specifically, proteins ingested from the oral cavity are decomposed into amino acids and peptides that can be absorbed into the body by the proteolytic enzyme and are absorbed into the body. The amino acids and peptides absorbed into the body are synthesized in muscle and are the source of hemoglobin and hormones in the blood. Therefore, in a case where the content of trypsin inhibitor, which is a factor that inhibits the proteolytic enzyme, is small, since the decomposition of proteins into amino acids or peptides is not inhibited, the digestibility of proteins is increased. Due to the high digestibility of proteins, since a larger amount of amino acids required for muscle synthesis can be absorbed into the body, the body weight is easily controlled while diminishing loss of muscle mass.

As described above, the soybean protein isolate contains almost no trypsin inhibitor. Therefore, most of the trypsin inhibitor contained in the total mass of the pet food of the pet food according to the present embodiment is derived from a plant-based ingredient other than the soybean protein isolate.

The mass of the trypsin inhibitor is more preferably 1.2 TIU/mg or less, still more preferably 1.0 TIU/mg or less in terms of dry matter with respect to the total mass of the pet food.

<<Essential amino acids>>

An essential amino acid refers to an amino acid that cannot be biosynthesized in the body, and varies somewhat depending on the species of an animal. Examples of essential amino acids in dogs include arginine, histidine, isoleucine, leucine, lysine, methionine, cystine, phenylalanine, tyrosine, threonine, tryptophan, and valine.

Examples of essential amino acids of cats include arginine, histidine, isoleucine, leucine, lysine, methionine, cystine, phenylalanine, tyrosine, threonine, tryptophan, valine, and taurine.

The pet food according to the present embodiment tends to increase the concentration of each of essential amino acids in blood at a predetermined time after feeding. Therefore, the pet food according to the present embodiment not only increases the concentration of an amino acid in blood that contributes to the effect of diminishing loss of muscle mass but also increases the concentration of other essential amino acids in blood, which can contribute to the health of the pet. Note that, in some cases, the concentration of each essential amino acid in blood also varies greatly depending on the individual fed with a pet food. Therefore, in the present embodiment, it is preferable that the concentration of each essential amino acid in blood after feeding is measured, for example, by the following procedure.

(Procedure 1): For a plurality of test individuals, blood is collected before starting feeding of the pet food according to the present embodiment is started, and the amount of amino acids in blood before feeding is measured.

(Procedure 2): Each test individual is fed with the pet food according to the present embodiment. A feeding amount (g/day) can be calculated for each individual based on the following calculation equation (1).

$$\text{Feeding amount} = \text{DER/metabolic energy of pet food (kcal/g)} \dots \text{equation (1)}$$

Daily energy requirement per day (DER (kcal/day)) was obtained based on the following equation (2). The coefficient "110" is adopted as an MER value for 3 to 7 year old dogs, as introduced in FEDIAF Nutritional Guidelines 2017 (Table VII-6. (p.62), Table VII-7 (p.63)).

$$\text{DER} = 110 \times \text{kg BW}^{0.75} \dots \text{equation (2)}$$

The feeding period in the case of evaluating the amount of amino acids in blood is not particularly limited, but feeding the test individual, for example, for 1 to 2 weeks makes it possible to evaluate more accurately the influence of the pet food according to the present embodiment on the amount of amino acids in blood.

(Procedure 3): Blood is collected at intervals of 30 minutes to 1 hour after feeding of the pet food, and the amount of amino acids in blood of each individual is measured.

The concentration of each amino acid in blood can be evaluated, for example, by the average value of all test individuals in a case where the concentration of each amino acid in blood before feeding of the pet according to the present embodiment is defined as 100% value.

In the pet food according to the present embodiment, the maximum value of the concentration of a total amount of essential amino acids in blood within 6 hours after feeding is preferably 125% or more, more preferably 130% or more, still more preferably 135% or more, even still more preferably 140% or more, and particularly preferably 145% or more of the concentration before feeding. Since the essential amino acid cannot be synthesized in the body, having such configuration makes it possible to supply a sufficient amount of the essential amino acid that serves as a material for muscle synthesis.

In the pet food according to the present embodiment, the maximum value of the concentration of valine in blood within 6 hours after feeding is preferably 135% or more, more preferably 140% or more, still more preferably 145% or more, even still more preferably 150% or more, and particularly preferably 155% or more, of the concentration before feeding.

Valine, which is an essential amino acid in dogs and cats, is effective in muscle strengthening and fatigue recovery.

In the pet food according to the present embodiment, the maximum value of the concentration of leucine in blood within 6 hours after feeding is preferably 150% or more, more preferably 155% or more, still more preferably 160% or more, even still more preferably 165% or more, and particularly preferably 170% or more of the concentration before feeding.

Leucine, which is an essential amino acid in dogs and cats, assists muscle synthesis (protein synthesis).

In the pet food according to the present embodiment, the maximum value of the concentration of isoleucine in blood within 6 hours after feeding is preferably 125% or more, more preferably 130% or more, still more preferably 135% or more, even still more preferably 140% or more, and particularly preferably 145% or more of the concentration before feeding.

Isoleucine, which is an essential amino acid in dogs and cats, assists muscle synthesis (protein synthesis).

In the pet food according to the present embodiment, the maximum value of the concentration of BCAA in blood within 6 hours after feeding is preferably 135% or more, more preferably 140% or more, still more preferably 145% or more, even still more preferably 150% or more, and particularly preferably 155% or more of the concentration before feeding.

"BCAA" is composed of valine, leucine, and isoleucine, is used as an energy source during exercise, and is contained much in the protein of muscle.

In the pet food according to the present embodiment, the maximum value of the concentration of arginine in blood within 6 hours after feeding is preferably 120% or more, more preferably 125% or more, still more preferably 130% or more, still more preferably 135% or more, and particularly preferably 140% or more of the concentration before feeding.

Arginine is an essential amino acid in dogs and cats. As arginine deficiency in dogs, hypophagia, severe vomiting, hyperammonemia, excessive salivation, muscle tremor, and the like have been reported. As arginine deficiency in cats, severe hyperammonemia has been reported, and vocalization, vomiting, salivation, hyperactivity, hyperesthesia, ataxia, tonic seizures, and refusal to eat have been reported, which leads to death in the worst case.

In the pet food according to the present embodiment, the maximum value of the concentration of lysine in blood within 6 hours after feeding is preferably 105% or more, more preferably 110% or more, still more preferably 115% or more, even still more preferably 120% or more, and particularly preferably 125% or more of the concentration before feeding.

In the pet food according to the present embodiment, the maximum value of the concentration of methionine in blood within 6 hours after feeding is preferably 135% or more, more preferably 140% or more, still more preferably 145% or more, even still more preferably 150% or more, and particularly preferably 155% or more of the concentration before feeding.

Lysine and methionine, which are an essential amino acid in dogs and cats, contribute to carnitine biosynthesis. Carnitine has two optical isomers, the L- and D-forms, and during the metabolism of lipids in which lipids are burned to produce energy in vivo, L-carnitine, which is the L-form, plays a role of transporting fatty acids into the mitochondria, which are the site of burning.

In the pet food according to the present embodiment, the maximum value of the concentration of cystine in blood within 6 hours after feeding is preferably 140% or more, more preferably 145% or more, still more preferably 150% or more, even still more preferably 155% or more, and particularly preferably 160% or more of the concentration before feeding.

Cystine, which is an essential amino acid in dogs and cats, is a sulfur-containing amino acid and is essential for hair development. Cystine has a structure in which two cysteine molecules are bonded to each other. Cysteine can be synthesized from methionine, but when cystine with a cysteine molecule is sufficiently supplied, methionine can achieve a function other than cysteine synthesis.

In the pet food according to the present embodiment, the maximum value of the concentration of threonine in blood within 6 hours after feeding is preferably 120% or more, more preferably 125% or more, still more preferably 130% or more, even still more preferably 135% or more, and particularly preferably 140% or more of the concentration before feeding.

In the pet food according to the present embodiment, the maximum value of the concentration of phenylalanine in blood within 6 hours after feeding is preferably 130% or more, more preferably 135% or more, still more preferably 140% or more, even still more preferably 145% or more, and particularly preferably 150% or more of the concentration before feeding.

In the pet food according to the present embodiment, the maximum value of the concentration of tyrosine in blood within 6 hours after feeding is preferably 155% or more, more preferably 160% or more, still more preferably 165% or more, even still more preferably 170% or more, and particularly preferably 175% or more of the concentration before feeding.

In the pet food according to the present embodiment, the maximum value of the concentration of tryptophan in blood within 6 hours after feeding is preferably 135% or more, more preferably 140% or more, still more preferably 145% or more, even still more preferably 150% or more, and particularly preferably 155% or more of the concentration before feeding.

In the case where the concentrations of threonine, phenylalanine, tyrosine, and tryptophan, which are an essential amino acid in dogs and cats, in blood satisfy the above composition, protein biosynthesis promotes advantageously, which makes it possible to diminish loss of muscle mass in pets and makes it possible for the breeder to facilitate body weight control of the pets.

In the pet food according to the present embodiment, the maximum value of the concentration of ornithine in blood within 6 hours after feeding is preferably 195% or more, more preferably 200% or more, still more preferably 205% or more, even still more preferably 210% or more, and particularly preferably 215% or more of the concentration before feeding.

Ornithine is an amino acid that has a detoxifying action when a high level of protein is ingested, and therefore, having the above composition makes it possible to regulate the amount of amino acids in the body.

In the pet food according to the present embodiment, the maximum value of the concentration of glutamine in blood within 6 hours after feeding is preferably 105% or more, more preferably 110% or more, and still more preferably 113% or more of the concentration before feeding.

L-glutamine is heat-labile and is decomposed into glutamic acid and ammonia. Ammonia is a toxic substance for animals, including dogs and cats. Therefore, it is preferable that L-glutamine is produced by decomposition of a protein derived from a basic ingredient as a protein source in the body, rather than artificially producing L-glutamine.

In the pet food according to the present embodiment, a formulation of basic ingredients is not particularly limited as long as the pet food is a comprehensive nutritional diet that satisfies criteria of nutritional foods. As the pet food, it is preferable to set a formulation of basic ingredients so that a nutritional composition of food particles is satisfied and favorable moldability is obtained. The pet food according to the present embodiment can be more preferably used as a pet food for dogs.

[Basic ingredients]

In the pet food according to the present embodiment, basic ingredients are not limited as long as the above-described composition is satisfied. Well-known basic ingredients can be used in manufacturing of the pet food.

Examples of powder basic ingredients include grains (corn, wheat, rice, barley, oat, rye, and the like), beans (defatted soybeans, whole soybeans, and the like), starches (wheat starch, corn starch, rice starch, potato starch, tapioca starch, sweet potato starch, sago starch, and the like), basic ingredient as a plant-based protein source (corn gluten meal, wheat gluten, and the like), meat (chicken, beef, pork, venison, meals (chicken meal, pork meal, beef meal, mixed meal thereof), and the like), fish and shellfish (fish meat, meals (fish meal), and the like), vegetables, and powdery additives (vitamins, minerals, amino acids, flavor basic ingredients, fibers, colorants, palatants, and the like). Meals means powders obtained by compressing and finely crushing meat or fish and shellfish.

Examples of palatants include animal-based extract, plant-based extract, yeast extract (beer yeast extract, baker's yeast extract, torula yeast extract), dry products of yeast (beer yeast, baker's yeast, torula yeast, and the like), and the like.

A formulation of basic ingredients is not particularly limited. It is preferable to set the formulation so that a nutritional composition of food particles to be obtained is satisfied and favorable moldability is obtained.

Examples of formulations include a total of 100 mass % containing 40 to 75 mass % of grains, 10 to 25 mass % of meat, 5 to 15 mass % of fish and shellfish, 2 to 5 mass % of vitamins and minerals, 2 to 20 mass % of oils and fats, and other components for the residual content.

As a liquid basic ingredient added to the powder basic ingredient, a liquid basic ingredient such as water, oils and fats, liquid sugar, palatant solutions, fragrances, and coloring agents can be used as necessary. Furthermore, after drying swollen particles, the particles may be coated with a liquid basic ingredient (coating agent) including oils and fats, seasoning agents, palatants, fragrances, or the like.

The oils and fats may be plant-based oils and fats, or may be animal-based oils and fats (chicken oil, pork fat (lard), beef tallow (het), milk fat, and the like). The coating agent preferably contains animal-based oils and fats, and particularly preferably contains beef tallow.

[Shape and size]

The shape of food particles constituting the pet food according to the present embodiment is not particularly limited as long as it is a shape suitable for pets to eat. For example, any shape such as a spherical shape, a polygonal body shape, a columnar shape, a doughnut shape, a plate shape, an ellipsoidal shape (grid shape), and a clover shape is applicable. Furthermore, regarding the size of the food particles, the food particles may be in a small particle form that a pet can chew with a bite, or may be in a large particle form that a pet can bite multiple times.

Regarding the size of the food particles, for example, a shortest diameter and a longest diameter are preferably 3 to 30 mm, respectively, are more preferably 6 to 16.5 mm, respectively, and are even more preferably 7 to 13 mm, respectively.

<Method for manufacturing pet food>

As a method for manufacturing the pet food according to the present embodiment, a well-known method can be used, and there is no particular limitation as long as the composition of the above-described present embodiment is satisfied. As a well-known method, there is a method for manufacturing the pet food in the following order: a granulating step, a drying step, and a coating step.

[Granulating step]

A granulating step is a step of granulating a basic ingredient mixture to obtain particles. Examples of granulating steps include a method in which basic ingredients are mixed to form a basic ingredient mixture, and the basic ingredient mixture is molded (granulated) into a particle shape.

Specific examples of granulating steps include a method for manufacturing particles (swollen particles) using an extruder.

As a method for manufacturing particles using an extruder, for example, a method disclosed in "Small Animal Clinical Nutrition, 5th Edition" (edited by Michael S. Hand, Craig D. Thatcher, Rebecca L. Remillard, Philip Roudebusg, and Bruce J. Novotny; published by Mark Morris Associates; 2014; p. 209 to p. 215) can be applied.

[Drying step]

The drying step is a step of drying the particles obtained by the above-described granulating step. Examples of methods of drying particles include known methods such as a method of drying naturally, a method of drying by blowing warm air, a method of drying by decompressing, and a method of drying by freeze-drying. Among these drying methods, the method of drying by blowing warm air is preferable from the viewpoint of inactivating the protease inhibitor and improving a digestibility of protein.

[Coating step]

The coating step is a step of coating the food particles obtained in the drying step with a coating agent including coarse beef tallow, seasoning agents, fragrances, or the like.

A method of coating the food particles is not particularly limited. For example, a vacuum coating method can be used. The vacuum coating method is a method of decompressing in a state where warmed particles are brought into contact with or adhered to oils and fats or the like. The coating agent may be in a liquid state or in a powder state. The coating makes it possible to improve palatability (foraging behavior of pets) for pets.

Examples

<Examples 1 to 2 and Comparative Examples 1 to 2>

(Manufacturing of pet food)

Basic ingredients constituting a comprehensive nutritional diet pet food were mixed in a formulation shown in Table 1. The obtained mixture of basic ingredients was put into an extruder and subjected to a heat treatment at 100°C to 140°C for 1 to 5 minutes while kneading to gelatinize a starch component, and then extruded and granulated into a grain shape at an outlet of the extruder and swelled at the same time to obtain swollen particles. The obtained swollen particles were subjected to a drying treatment at 125° C. for 15 minutes using a dryer, and thereby a pet food of each example was obtained.

[Table 1]

|  | Example 1 | Comparative Example 1 | Example 2 | Comparative Example 2 |
|---|---|---|---|---|
| Animal-based protein | 17.5% | 16.5% | 17.5% | 16.5% |
| Soybean protein isolate | 10.0% | - | 10.0% | - |
| Basic ingredient as plant-based protein source | - | 11.4% | - | 11.4% |
| Grains | 57.1% | 61.5% | 57.1% | 61.5% |
| Cellulose | 3.0% | - | 3.0% | - |
| Beat pulp | 2.0% | 2.1% | 2.0% | 2.1% |
| animal-based oils and fats | 7.0% | 7.4% | 7.0% | 7.4% |
| Vitamin and mineral | 2.4% | 1.1% | 2.4% | 1.1% |
| Other components | 1.0% | - | 1.0% | - |
| Total | 100.0% | 100.0% | 100.0% | 100.0% |

The "basic ingredient as a plant-based protein source" used in Comparative Examples 1 and 2 was corn gluten meal and a defatted soybean, and the pet foods of Comparative Examples 1 and 2 did not contain soybean protein isolate. Since many dietary fibers are contained in the corn gluten meal and the defatted soybean used in comparative examples 1 and 2, cellulose was added to the pet food of Examples 1 and 2 such that the dietary fiber mass contained in the pet foods of Examples 1 and 2 and the dietary fiber mass contained in the pet foods of Comparative Examples 1 and 2 was equivalent.

"Other components" in Table 1 were ingredients derived from a palatant such as an animal-based extract, a plant-based extract, or a yeast extract.

Table 2 shows analysis results of general components of the pet foods of Examples 1 to 2 and Comparative Examples 1 to 2.

[Table 2]

|  | Example 1 | Comparative Example 1 | Example 2 | Comparative Example 2 |
|---|---|---|---|---|
| Water | 8.2% | 9.0% | 9.2% | 8.5% |
| Protein | 31.2% | 24.0% | 30.9% | 23.6% |
| Lipid | 13.0% | 13.0% | 13.5% | 12.0% |
| Coarse fiber | 2.6% | 2.0% | 2.5% | 1.8% |
| Ash | 4.5% | 6.1% | 4.2% | 5.8% |
| Calorie | 361.5 kcal/100 g | 355.2 kcal/100 g | 361.9 kcal/100 g | 353.7 kcal/100 g |
| Trypsin inhibitor | 0.3 TIU/mg | 1.4 TIU/mg | 0.3 TIU/mg | 1.4 TIU/mg |

(Evaluation 1: Body weight control evaluation)

The predetermined feeding amount of pet food of Example 1 was fed to 4 to 7 year old seven beagles of Example individuals No. 1 to 7 in three consecutive periods of the weight loss period, the adjustment period, and the maintenance period.

BCS is an index indicating the degree of obesity, which is evaluated on a nine-point scale by confirming, for an individual, the chin, around the neck, the ribs, the belly, the waist, the manner of how fat is formed on the tail, and whether constriction occurs, by a veterinarian's visual observation, palpation or the like. In European Pet Food Industry Association (FEDIAF), according to BCS, a case of "Emaciated" is evaluated as 1, a case of "Very thin" is evaluated as 2, a case of "Thin" is evaluated as 3, a case of "Slightly underweight" is evaluated as 4, a case of "Ideal (ideal weight (normal))" is evaluated as 5, a case of "Slightly overweight" is evaluated as 6, a case of "Overweight" is evaluated as 7, a case of "Obese" is evaluated as 8, and a case of "Grossly obese" is evaluated as 9.

Example individuals No. 1 to 7 in which the mean BCS thereof was evaluated as 7.0, "Overweight", at the test start day, was used as a group of individuals.

During the test period, the breeding environment for Example individuals No. 1 to 7 fed the pet food of Example 1 was the same. In addition, as a result of digitalizing the 24-hour activity amount of Example individuals using Actiwatch mini (manufactured by CamNtech Ltd.), the activity amounts thereof were the same.

<Feeding amount>

The feeding amount (g/day) was calculated for each individual based on the following calculation equation (1).

$$\text{Feeding amount} = \text{DER}/\text{metabolic energy of pet food (kcal/g)} \ldots \text{equation (1)}$$

Daily energy requirement per day (DER (kcal/day)) was obtained by multiplying the coefficient $\alpha$ described below and determined for each period of the weight loss period, the adjustment period, and the maintenance period by the body weight in terms of kg (kg BW) to the power of 0.75, based on the following equation (2). As the coefficient $\alpha$ described below, the values introduced in FEDIAF Nutritional Guidelines 2017 (Table VII-6 (p. 67)) were used.

$$\text{DER} = \alpha \times \text{kg BW}^{0.75} \ldots \text{equation (2)}$$

<<Weight loss period>>

The weight loss period was defined as the period from the test start day (day 0) to day 84 (from the start day of week 1 to the last day of week 12).

The feeding amount of the pet food in the weight loss period was calculated based on the above equation (1) by setting the coefficient $\alpha$ in the above equation (2) to "70".

<<Adjustment period>>

The adjustment period was defined as the period from day 85 to day 119 (from the start day of week 13 to the last day of week 17) from the test start day.

The feeding amount of the pet food in the adjustment period was calculated by the above equation (1) by setting the coefficient $\alpha$ in the above equation (2) for each individual.

The reason why the "adjustment period" in which the coefficient $\alpha$ was set for each individual was provided between the weight loss period and the maintenance period was to clarify the change in evaluation in the maintenance period after the adjustment period by adjusting the BCS of all individuals to be in a range of 4 to 5 such that a variation of BCS generated on the last day of the weight loss period (day 84) was eliminated.

<<Maintenance period>>

The maintenance period was defined as the period from day 120 to day 209 (from the start day of Week 17 to the last day of Week 29) from the test start day.

The feeding amount of the pet food in the maintenance period was calculated based on the above equation (1) by setting the coefficient $\alpha$ in the above equation (2) to "95".

<Body weight control evaluation>

As evaluation of body weight control, the body weight, the body fat percentage, the lean body mass rate, and LBM/Fat were used. The measurement dates of body weight and body fat percentage were set to the test start day (day 0), day 28, day 56, day 84, day 119, day 147, day 175, and day 203 from the test start day. The lean body mass rate and LBM/Fat were calculated based on the measured values of body weight and body fat percentage on the above measurement dates.

<<Body weight>>

The total body weight of the individual including the hair was measured using GP100K (manufactured by A&D Company, Limited), and was defined as body weight (kg).

<<Body fat percentage>>

The body fat percentage was measured using a "body fat percentage meter for health lab dog" that employs a bioimpedance method.

<<Lean body mass rate>>

The lean body mass rate was calculated by setting the body weight of the individual as 100% and subtracting the body fat percentage from 100%.

$$\text{Lean body mass rate (\%)} = 100\% - \text{body fat percentage (\%)}$$

Since the body fat percentage decreases as the lean body mass rate increases, it is preferable that the value of the lean body mass rate is high.

<<LBM/Fat>>

LBM/Fat was defined as a value by dividing the lean body mass (LBM) by the body fat mass (Fat). The lean body mass (LBM) was calculated by multiplying the body weight by the lean body mass rate, and the body fat mass (Fat) was calculated by multiplying the body weight by the body fat percentage.
The evaluation of body weight is shown in Table 3, the evaluation of body fat percentage is shown in Table 4, the evaluation of lean body mass rate is shown in Table 5, and the evaluation of LBM/Fat is shown in Table 6.

[Table 3]

| Example Individual No. | Weight loss period | | | | Adjustment period | Maintenance period | | |
|---|---|---|---|---|---|---|---|---|
| | Day 0 | Day 28 | Day 56 | Day 84 | Day 119 | Day 147 | Day 175 | Day 203 |
| 1 | 13.8 | 12.3 | 11.6 | 10.6 | 10.0 | 9.7 | 9.6 | 9.7 |
| 2 | 13.9 | 12.6 | 11.9 | 11.4 | 11.3 | 11.4 | 11.2 | 10.9 |
| 3 | 15.0 | 13.1 | 12.3 | 11.9 | 11.8 | 11.6 | 11.6 | 11.8 |
| 4 | 15.8 | 15.2 | 14.6 | 14.0 | 13.0 | 13.7 | 13.6 | 13.7 |
| 5 | 15.3 | 13.5 | 12.9 | 12.5 | 12.4 | 12.5 | 12.2 | 12.1 |
| 6 | 15.7 | 13.7 | 12.0 | 10.8 | 11.9 | 11.3 | 10.5 | 10.4 |
| 7 | 13.3 | 11.4 | 10.7 | 10.2 | 9.8 | 9.4 | 9.2 | 9.1 |
| Average | 14.7 | 13.1 | 12.3 | 11.6 | 11.5 | 11.4 | 11.1 | 11.1 |
| Standard deviation | 0.9 | 1.1 | 1.1 | 1.2 | 1.1 | 1.4 | 1.4 | 1.5 |

[Table 4]

| Example Individual No. | Weight loss period | | | | Adjustment period | Maintenance period | | |
|---|---|---|---|---|---|---|---|---|
| | Day 0 | Day 28 | Day 56 | Day 84 | Day 119 | Day 147 | Day 175 | Day 203 |
| 1 | 26.3 | 25.7 | 20.3 | 19.3 | 19.0 | 18.3 | 17.3 | 14.7 |
| 2 | 31.3 | 30.0 | 25.7 | 21.0 | 20.0 | 20.7 | 19.3 | 19.7 |
| 3 | 33.0 | 32.7 | 23.3 | 19.3 | 19.0 | 18.7 | 18.0 | 17.3 |
| 4 | 33.3 | 33.0 | 31.7 | 27.3 | 24.0 | 25.7 | 26.0 | 25.0 |

(continued)

| Example Individual No. | Weight loss period | | | | Adjustment period | Maintenance period | | |
|---|---|---|---|---|---|---|---|---|
| | Day 0 | Day 28 | Day 56 | Day 84 | Day 119 | Day 147 | Day 175 | Day 203 |
| 5 | 33.3 | 29.7 | 23.3 | 18.7 | 19.3 | 19.7 | 19.3 | 19.3 |
| 6 | 27.0 | 24.7 | 17.0 | 14.0 | 15.3 | 15.0 | 14.3 | 14.3 |
| 7 | 25.7 | 25.0 | 22.3 | 19.0 | 17.7 | 16.0 | 15.3 | 15.3 |
| Average | 30.0 | 28.7 | 23.4 | 19.8 | 19.2 | 19.1 | 18.5 | 18.0 |
| Standard deviation | 3.3 | 3.3 | 4.2 | 3.7 | 2.4 | 3.2 | 3.5 | 3.5 |

[Table 5]

| Example Individual No. | Weight loss period | | | | Adjustment period | Maintenance period | | |
|---|---|---|---|---|---|---|---|---|
| | Day 0 | Day 28 | Day 56 | Day 84 | Day 119 | Day 147 | Day 175 | Day 203 |
| 1 | 73.7 | 74.3 | 79.7 | 80.7 | 81.0 | 81.7 | 82.7 | 85.3 |
| 2 | 68.7 | 70.0 | 74.3 | 79.0 | 80.0 | 79.3 | 80.7 | 80.3 |
| 3 | 67.0 | 67.3 | 76.7 | 80.7 | 81.0 | 81.3 | 82.0 | 82.7 |
| 4 | 66.7 | 67.0 | 68.3 | 72.7 | 76.0 | 74.3 | 74.0 | 75.0 |
| 5 | 66.7 | 70.3 | 76.7 | 81.3 | 80.7 | 80.3 | 80.7 | 80.7 |
| 6 | 73.0 | 75.3 | 83.0 | 86.0 | 84.7 | 85.0 | 85.7 | 85.7 |
| 7 | 74.3 | 75.0 | 77.7 | 81.0 | 82.3 | 84.0 | 84.7 | 84.7 |
| Average | 70.0 | 71.3 | 76.6 | 80.2 | 80.8 | 80.9 | 81.5 | 82.0 |
| Standard deviation | 3.3 | 3.3 | 4.2 | 3.7 | 2.4 | 3.2 | 3.5 | 3.5 |

[Table 6]

| Example Individual No. | Weight loss period | | | | Adjustment period | Maintenance period | | |
|---|---|---|---|---|---|---|---|---|
| | Day 0 | Day 28 | Day 56 | Day 84 | Day 119 | Day 147 | Day 175 | Day 203 |
| 1 | 2.80 | 2.90 | 3.92 | 4.17 | 4.26 | 4.45 | 4.77 | 5.82 |
| 2 | 2.19 | 2.33 | 2.90 | 3.76 | 4.00 | 3.84 | 4.17 | 4.08 |
| 3 | 2.03 | 2.06 | 3.29 | 4.17 | 4.26 | 4.36 | 4.56 | 4.77 |
| 4 | 2.00 | 2.03 | 2.15 | 2.66 | 3.17 | 2.90 | 2.85 | 3.00 |
| 5 | 2.00 | 2.37 | 3.29 | 4.36 | 4.17 | 4.08 | 4.17 | 4.17 |
| 6 | 2.70 | 3.05 | 4.88 | 6.14 | 5.52 | 5.67 | 5.98 | 5.98 |
| 7 | 2.90 | 3.00 | 3.48 | 4.26 | 4.66 | 5.25 | 5.52 | 5.52 |
| Average | 2.37 | 2.54 | 3.41 | 4.22 | 4.29 | 4.36 | 4.57 | 4.76 |
| Standard deviation | 0.38 | 0.41 | 0.78 | 0.95 | 0.66 | 0.85 | 0.94 | 1.01 |

From Tables 3 to 6, it is clarified that feeding a predetermined amount of the pet food of Example 1 every period makes it possible to decrease the body fat mass (body fat percentage) while diminishing loss of muscle mass (lean body mass) in pets.

(Evaluation 2: Evaluation of amino acids amount in blood)

The amount of amino acid in blood for 5 to 6 year old eight beagles of individuals No. 11 to 18 was measured.

The evaluation of the amount of amino acid in blood was performed by dividing it into Course 1 and Course 2 and by using crossover test. Course 1 was set to be for 7 days from day 1 to day 7, four beagles of individual No. 11 to 14 were fed the pet food of Example 2, and four beagles of individual No. 15 to 18 were fed the pet food of Comparative Example 2. Course 2 was set to be for 7 days from day 8 to day 14, four beagles of individual No. 11 to 14 were fed the pet food of Comparative Example 2, and four beagles of individual No. 15 to 18 were fed the pet food of Example 2.

<Feeding amount>

The feeding amount (g/day) was calculated for each individual based on the following calculation equation (1).

$$\text{Feeding amount} = \text{DER/metabolic energy of pet food (kcal/g)} \;...\; \text{equation (1)}$$

Daily energy requirement per day (DER (kcal/day)) was obtained based on the following equation (2). The coefficient "110" is adopted as an MER value for 3 to 7 year old dogs, as introduced in FEDIAF Nutritional Guidelines 2017 (Table VII-6. (p.62), Table VII-7 (p.63)).

$$\text{DER} = 110 \times \text{kg BW}^{0.75} \;...\; \text{equation (2)}$$

<Amount of amino acids in blood>

At a predetermined time on day 7, which is the last day of Course 1, and on day 14, which is the last day of Course 2, blood for individuals No. 11 to 18 was collected, and the amount of amino acids in blood for individuals No. 11 to 18 was measured.

The blood collection is carried out 6 times, and the predetermined times when blood is collected are the following: immediately before feeding the pet food, at the elapse of 30 minutes, 1 hour, 2 hours, 4 hours, and 6 hours after feeding the pet food. The time "After feeding the pet food" means a time measured from the time when the individual finished eating all of the fed pet food. For example, in a case of "at the elapse of 30 minutes after feeding the pet food", blood of individual is collected at a time when 30 minutes have elapsed from the time when the individual finished eating all of the fed pet food.

Among the amino acids, the amount of the following amino acids in blood was measured: valine, leucine, isoleucine, BCAA (total amount of valine, leucine, isoleucine), arginine, lysine, methionine, cystine, threonine, phenylalanine, tyrosine, tryptophan, ornithine, glutamine, and essential amino acids (total amount of arginine, histidine, isoleucine, leucine, lysine, methionine, cystine, phenylalanine, tyrosine, threonine, tryptophan, and valine). The amount of various amino acids contained in the blood collected immediately before feeding the pet food is set to 100%, and the increase-decrease ratio of the amounts of various amino acids (shown in [] in the table) in the blood collected at the elapse of 30 minutes, 1 hour, 2 hours, 4 hours, and 6 hours after feeding the pet food are shown in Tables 7 to 30.

For example, in Table 11, "[Valine] Example individual 11" indicates the individual No. 11 who was fed the pet food of Example 2 in Course 1, and "[Valine] Example individual 15" indicates the individual No. 15 who was fed the pet food of Example 2 in Course 2. In Table 12, "[Valine] Comparative Example individual 11" indicates the individual No. 11 who was fed the pet food of Comparative Example 2 in Course 2, and "[Valine] Comparative Example individual 15" indicates the individual No. 15 who was fed the pet food of Comparative Example 2 in Course 1. The same applies to other expressions in the following table.

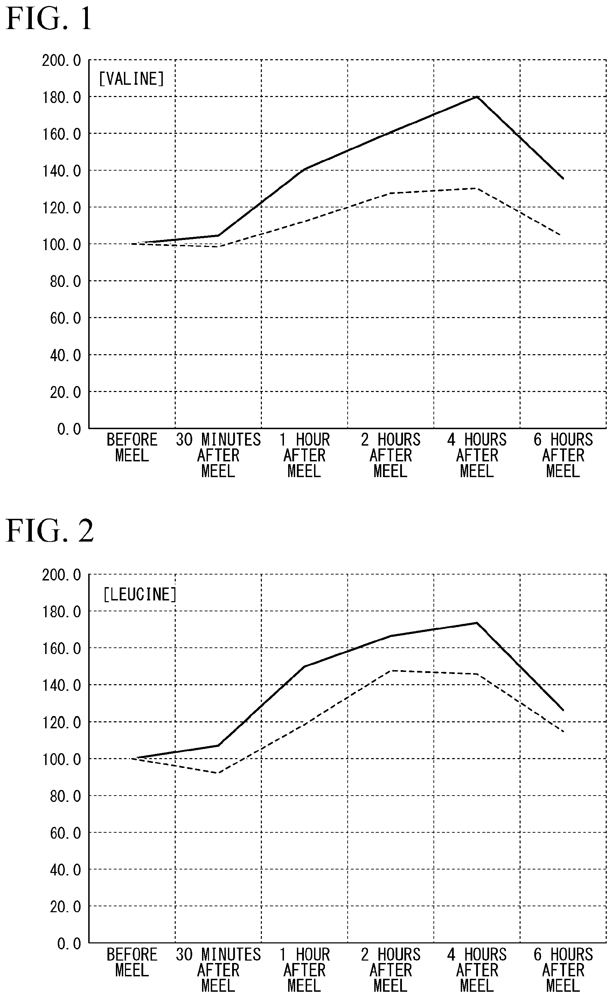

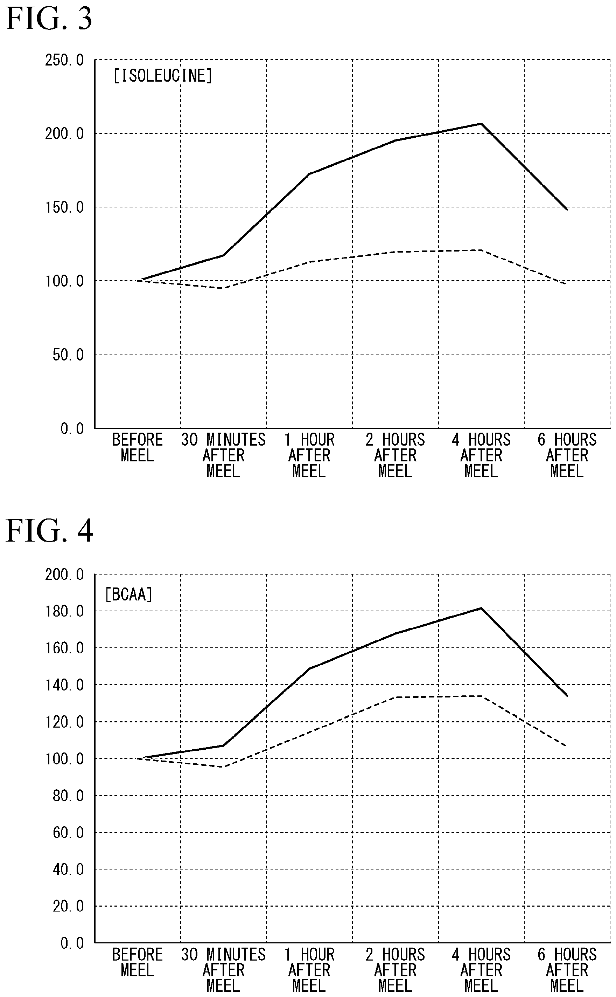

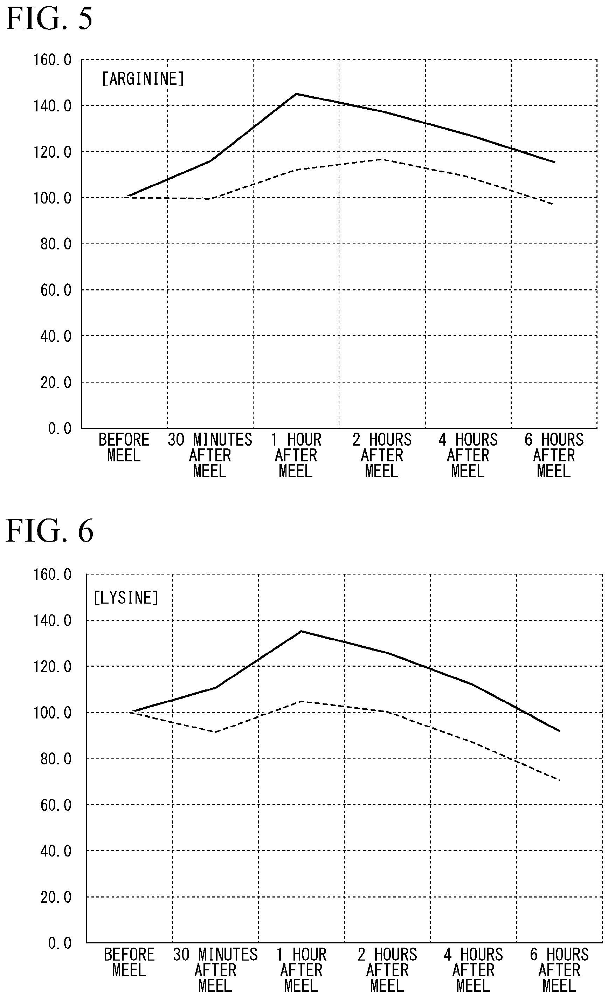

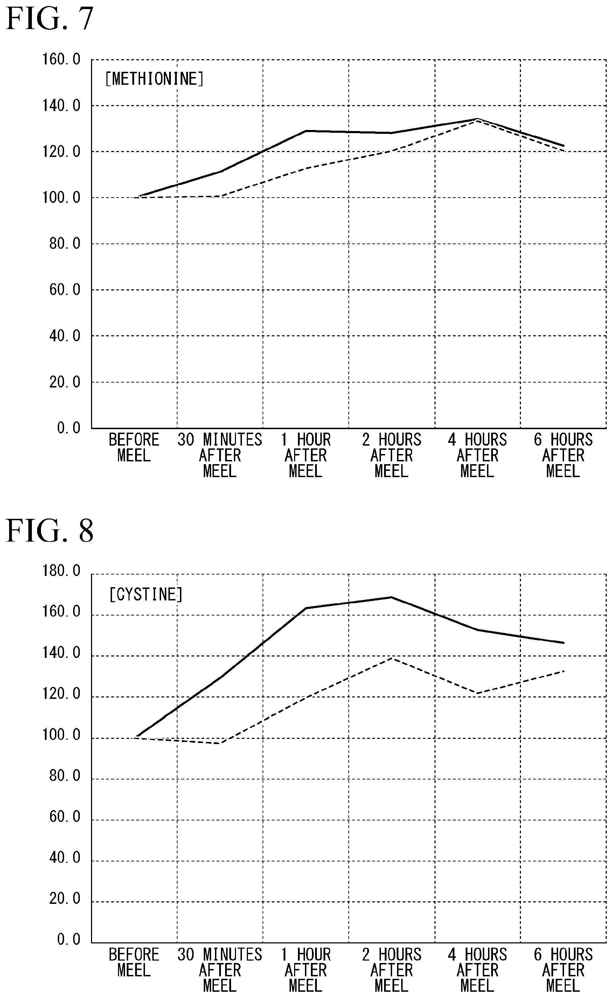

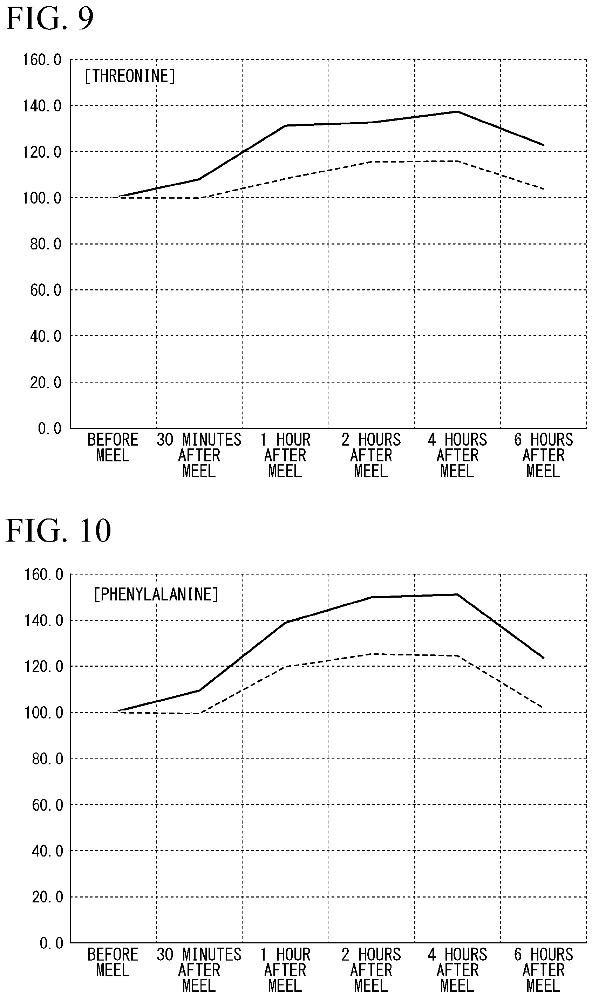

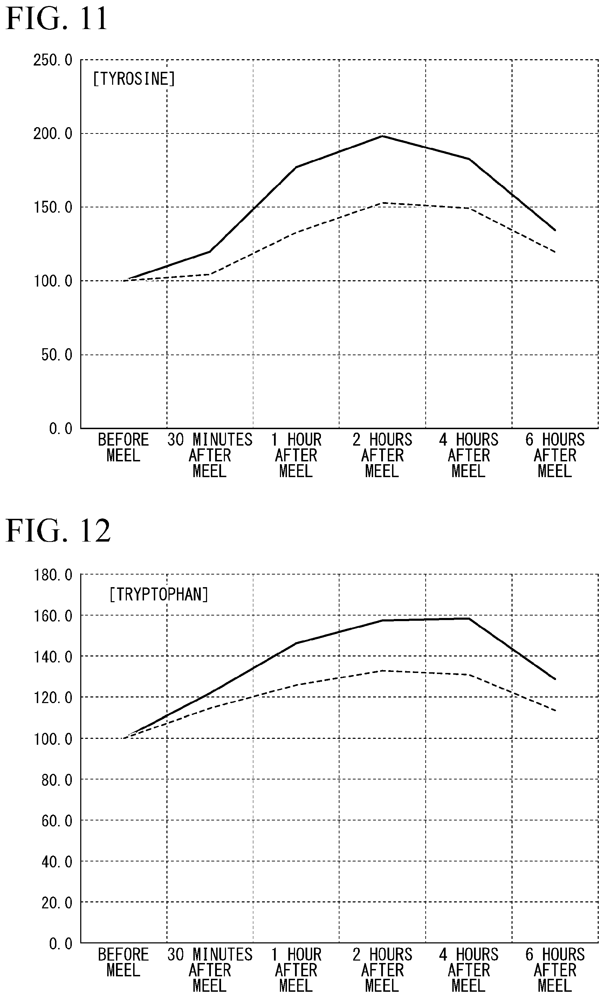

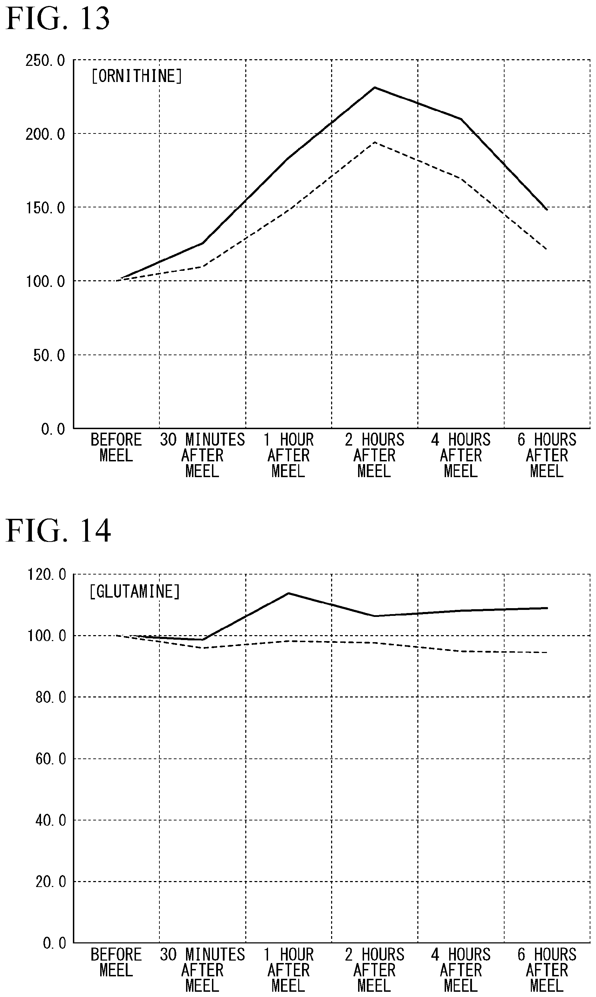

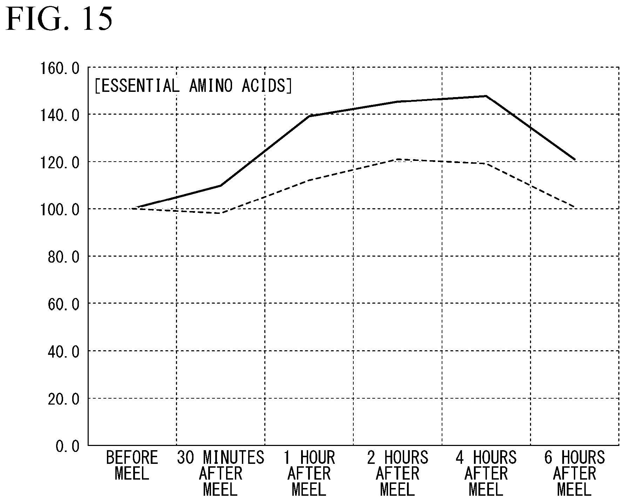

In addition, in order to visualize the increase and decrease of the average value of each of the group of Example individuals and the group of Comparative Example individuals, the amounts of various amino acids (shown in [] in the figure) in blood are shown as graphs in Figures 1 to 15. In the graphs of Figures 1 to 15, the solid line represents the average value of the group of Example individuals, and the dashed line represents the average value of the group of Comparative Example individuals.

[Table 7]

| [Valine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 94.2 | 122.0 | 151.0 | 191.3 | 189.5 |
| 12 | 100.0 | 113.6 | 144.8 | 178.1 | 153.5 | 128.5 |

(continued)

| [Valine] Example individual | Before feeding | 30 minutes after feeding | 1 hour after feeding | 2 hours after feeding | 4 hours after feeding | 6 hours after feeding |
|---|---|---|---|---|---|---|
| 13 | 100.0 | 98.7 | 139.3 | 128.2 | 165.3 | 161.3 |
| 14 | 100.0 | 112.7 | 139.8 | 172.9 | 248.8 | 160.1 |
| 15 | 100.0 | 92.8 | 119.7 | 145.4 | 150.5 | 94.5 |
| 16 | 100.0 | 104.9 | 161.1 | 192.1 | 181.7 | 118.7 |
| 17 | 100.0 | 93.1 | 138.5 | 148.7 | 140.4 | 104.6 |
| 18 | 100.0 | 125.1 | 158.4 | 167.5 | 207.3 | 126.4 |
| Average | 100.0 | 104.4 | 140.4 | 160.5 | 179.9 | 135.4 |
| Standard deviation | 0.0 | 11.1 | 13.9 | 19.4 | 33.5 | 30.1 |

[Table 8]

| [Valine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 106.0 | 113.4 | 135.4 | 131.0 | 121.4 |
| 12 | 100.0 | 103.5 | 116.4 | 131.8 | 156.0 | 119.7 |
| 13 | 100.0 | 83.6 | 95.2 | 103.3 | 119.0 | 85.7 |
| 14 | 100.0 | 88.3 | 110.2 | 132.7 | 152.8 | 104.5 |
| 15 | 100.0 | 92.7 | 110.2 | 108.7 | 108.7 | 96.7 |
| 16 | 100.0 | 104.4 | 123.8 | 137.0 | 130.3 | 96.6 |
| 17 | 100.0 | 104.3 | 106.6 | 128.6 | 112.1 | 99.2 |
| 18 | 100.0 | 104.3 | 121.1 | 142.0 | 131.0 | 108.0 |
| Average | 100.0 | 98.4 | 112.1 | 127.4 | 130.1 | 104.0° |
| Standard deviation | 0.0 | 8.2 | 8.4 | 13.0 | 16.2 | 11.3 |

[Table 9]

| [Leucine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 90.2 | 118.1 | 146.7 | 171.2 | 178.7 |
| 12 | 100.0 | 117.4 | 161.4 | 184.7 | 146.0 | 133.1 |
| 13 | 100.0 | 74.8 | 124.6 | 113.8 | 136.9 | 129.2 |
| 14 | 100.0 | 130.2 | 162.0 | 185.9 | 272.2 | 148.6 |
| 15 | 100.0 | 87.8 | 123.1 | 135.7 | 132.9 | 88.9 |
| 16 | 100.0 | 118.4 | 176.7 | 195.1 | 162.1 | 106.6 |
| 17 | 100.0 | 104.3 | 157.3 | 173.2 | 157.7 | 105.5 |
| 18 | 100.0 | 133.1 | 174.7 | 195.9 | 209.2 | 119.0 |
| Average | 100.0 | 107.0 | 149.7 | 166.4 | 173.5 | 126.2 |
| Standard deviation | 0.0 | 19.8 | 22.5 | 28.6 | 43.5 | 26.4 |

[Table 10]

| [Leucine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 98.5 | 102.2 | 158.9 | 147.3 | 134.3 |
| 12 | 100.0 | 99.4 | 117.4 | 144.5 | 172.5 | 127.8 |
| 13 | 100.0 | 69.3 | 99.7 | 110.0 | 128.5 | 87.1 |
| 14 | 100.0 | 83.1 | 120.2 | 169.7 | 200.6 | 135.8 |
| 15 | 100.0 | 83.7 | 111.4 | 116.7 | 116.7 | 108.7 |
| 16 | 100.0 | 105.9 | 145.1 | 161.9 | 134.4 | 105.8 |
| 17 | 100.0 | 104.8 | 134.2 | 166.9 | 144.3 | 117.7 |
| 18 | 100.0 | 92.4 | 117.4 | 151.8 | 122.1 | 101.1 |
| Average | 100.0 | 92.1 | 118.5 | 147.6 | 145.8 | 114.8 |
| Standard deviation | 0.0 | 11.8 | 14.3 | 21.2 | 26.4 | 16.1 |

[Table 11]

| [Isoleucine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 95.4 | 124.9 | 165.9 | 200.2 | 201.5 |
| 12 | 100.0 | 119.4 | 169.1 | 185.1 | 152.9 | 134.5 |
| 13 | 100.0 | 77.1 | 138.0 | 122.2 | 156.9 | 150.4 |
| 14 | 100.0 | 114.8 | 166.5 | 191.6 | 284.7 | 155.1 |
| 15 | 100.0 | 110.6 | 162.4 | 180.3 | 171.3 | 122.4 |
| 16 | 100.0 | 133.7 | 192.0 | 229.0 | 197.2 | 122.7 |
| 17 | 100.0 | 124.7 | 214.6 | 241.3 | 218.3 | 141.3 |
| 18 | 100.0 | 161.8 | 211.2 | 244.8 | 270.3 | 157.1 |
| Average | 100.0 | 117.2 | 172.3 | 195.0 | 206.5 | 148.1 |
| Standard daviation | 0.0 | 23.6 | 30.1 | 39.1 | 46.1 | 23.8 |

[Table 12]

| [Isoleucine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 104.1 | 104.5 | 114.8 | 113.7 | 108.2 |
| 12 | 100.0 | 100.8 | 100.9 | 106.4 | 112.5 | 82.5 |
| 13 | 100.0 | 73.8 | 79.8 | 79.3 | 113.4 | 72.7 |
| 14 | 100.0 | 93.5 | 121.8 | 146.6 | 148.8 | 130.2 |
| 15 | 100.0 | 82.3 | 107.4 | 93.1 | 100.7 | 86.6 |
| 16 | 100.0 | 106.0 | 134.8 | 129.3 | 124.3 | 88.0 |
| 17 | 100.0 | 92.4 | 124.8 | 132.0 | 129.2 | 107.6 |
| 18 | 100.0 | 105.3 | 126.8 | 154.2 | 122.4 | 102.6 |
| Average | 100.0 | 94.8 | 112.6 | 119.5 | 120.6 | 97.3 |
| Standard deviation | 0.0 | 11.0 | 16.7 | 24.2 | 13.5 | 17.2 |

[Table 13]

| [BCAA] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 93.0 | 121.1 | 152.2 | 185.7 | 187.8 |
| 12 | 100.0 | 116.0 | 155.0 | 181.7 | 150.8 | 131.2 |
| 13 | 100.0 | 85.6 | 133.4 | 121.6 | 152.9 | 147.0 |
| 14 | 100.0 | 119.2 | 152.4 | 180.8 | 263.5 | 155.2 |
| 15 | 100.0 | 93.7 | 127.3 | 147.1 | 147.2 | 96.6 |
| 16 | 100.0 | 114.5 | 171.8 | 199.4 | 177.4 | 115.1 |
| 17 | 100.0 | 101.3 | 155.5 | 169.9 | 157.1 | 110.0 |
| 18 | 100.0 | 133.4 | 172.0 | 188.9 | 217.6 | 128.6 |
| Average | 100.0 | 107.1 | 148.6 | 167.7 | 181.5 | 133.9 |
| Standard deviation | 0.0 | 15.2 | 18.1 | 24.0 | 38.1 | 27.1 |

[Table 14]

| [BCAA] Comparative Example individual | Before feeding | 30 minutes after feeding | 1 hour after feeding | 2 hours after feeding | 4 hours after feeding | 6 hours after feeding |
|---|---|---|---|---|---|---|
|  | 100.0 | 102.9 | 107.7 | 140.0 | 133.6 | 123.5 |
| 12 | 100.0 | 101.5 | 113.7 | 131.4 | 153.3 | 115.3 |
| 13 | 100.0 | 76.5 | 94.1 | 101.4 | 121.5 | 83.9 |
| 14 | 100.0 | 87.4 | 115.5 | 147.6 | 168.5 | 119.4 |
| 15 | 100.0 | 87.3 | 110.1 | 108.9 | 110.3 | 99.5 |
| 16 | 100.0 | 105.3 | 133.9 | 145.3 | 130.8 | 98.7 |
| 17 | 100.0 | 102.6 | 119.2 | 142.7 | 126.2 | 107.1 |
| 18 | 100.0 | 99.7 | 120.5 | 147.9 | 126.1 | 104.4 |
| Average | 100.0 | 95.4 | 114.3 | 133.1 | 133.8 | 106.5 |
| Standard deviation | 0.0 | 9.7 | 10.7 | 17.0 | 17.4 | 12.0 |

[Table 15]

| [Arginine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 106.3 | 131.3 | 128.1 | 104.3 | 146.4 |
| 12 | 100.0 | 114.4 | 136.8 | 137.7 | 116.5 | 129.9 |
| 13 | 100.0 | 86.3 | 126.2 | 107.1 | 94.0 | 119.4 |
| 14 | 100.0 | 129.3 | 137.7 | 143.8 | 162.2 | 126.5 |
| 15 | 100.0 | 108.6 | 139.4 | 113.0 | 110.4 | 85.0 |
| 16 | 100.0 | 118.5 | 157.0 | 152.4 | 151.7 | 101.9 |
| 17 | 100.0 | 121.3 | 153.3 | 131.5 | 109.2 | 81.1 |
| 18 | 100.0 | 141.9 | 179.4 | 186.2 | 170.0 | 133.2 |
| Average | 100.0 | 115.8 | 145.1 | 137.5 | 127.3 | 115.4 |
| Standard deviation | 0.0 | 15.5 | 16.2 | 23.1 | 27.4 | 22.1 |

[Table 16]

| [Arginine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 107.5 | 108.0 | 127.8 | 108.8 | 121.3 |
| 12 | 100.0 | 111.3 | 122.7 | 101.1 | 100.1 | 103.3 |
| 13 | 100.0 | 96.4 | 104.4 | 98.3 | 99.6 | 82.5 |
| 14 | 100.0 | 96.9 | 111.8 | 130.8 | 137.3 | 109.6 |
| 15 | 100.0 | 94.5 | 96.1 | 88.9 | 83.9 | 88.6 |
| 16 | 100.0 | 97.5 | 120.4 | 120.4 | 128.9 | 86.8 |
| 17 | 100.0 | 104.4 | 115.8 | 111.7 | 82.8 | 84.5 |
| 18 | 100.0 | 87.3 | 118.0 | 154.1 | 131.0 | 99.9 |
| Average | 100.0 | 99.5 | 112.1 | 116.6 | 109.0 | 97.1 |
| deviation | 0.0 | 7.3 | 8.4 | 19.7 | 19.9 | 13.0 |

[Table 17]

| [Lysine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 122.5 | 143.4 | 146.9 | 130.6 | 133.5 |
| 12 | 100.0 | 119.1 | 145.7 | 132.3 | 110.1 | 95.0 |
| 13 | 100.0 | 88.4 | 129.7 | 98.9 | 104.4 | 102.1 |
| 14 | 100.0 | 123.9 | 128.7 | 131.5 | 142.2 | 99.1 |
| 15 | 100.0 | 97.0 | 117.9 | 100.5 | 80.5 | 70.2 |
| 16 | 100.0 | 106.4 | 140.5 | 135.7 | 118.7 | 79.5 |
| 17 | 100.0 | 110.2 | 143.5 | 118.0 | 102.0 | 66.1 |
| 18 | 100.0 | 117.5 | 131.9 | 142.9 | 106.3 | 90.5 |
| Average | 100.0 | 110.6 | 135.2 | 125.8 | 111.9 | 92.0 |
| deviation | 0.0 | 11.9 | 9.1 | 17.1 | 17.6 | 20.0 |

[Table 18]

| [Lysine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 98.5 | 100.8 | 108.0 | 91.7 | 77.0 |
| 12 | 100.0 | 106.7 | 107.5 | 89.1 | 89.5 | 68.5 |
| 13 | 100.0 | 81.7 | 96.8 | 86.7 | 77.3 | 59.3 |
| 14 | 100.0 | 88.2 | 113.2 | 122.7 | 104.2 | 76.1 |
| 15 | 100.0 | 82.6 | 93.3 | 73.7 | 66.8 | 59.1 |
| 16 | 100.0 | 97.4 | 114.3 | 105.7 | 91.0 | 69.0 |
| 17 | 100.0 | 90.8 | 107.7 | 101.3 | 81.6 | 75.7 |
| 18 | 100.0 | 86.5 | 104.3 | 114.5 | 93.5 | 80.3 |
| Average | 100.0 | 91.5 | 104.8 | 100.2 | 87.0 | 70.6 |

(continued)

| [Lysine] Comparative Example individual | Before feeding | 30 minutes after feeding | 1 hour after feeding | 2 hours after feeding | 4 hours after feeding | 6 hours after feeding |
|---|---|---|---|---|---|---|
| deviation | 0.0 | 8.1 | 7.0 | 15.0 | 10.7 | 7.6 |

[Table 19]

| [Methionine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 100.5 | 107.9 | 119.6 | 127.2 | 153.7 |
| 12 | 100.0 | 114.9 | 126.3 | 131.7 | 124.9 | 120.6 |
| 13 | 100.0 | 100.0 | 136.5 | 107.1 | 116.7 | 125.4 |
| 14 | 100.0 | 126.6 | 132.8 | 135.8 | 162.4 | 136.1 |
| 15 | 100.0 | 110.2 | 128.1 | 122.2 | 124.5 | 102.1 |
| 16 | 100.0 | 114.6 | 134.7 | 145.7 | 154.3 | 122.7 |
| 17 | 100.0 | 109.2 | 138.7 | 130.9 | 132.4 | 112.2 |
| 18 | 100.0 | 113.8 | 127.4 | 132.4 | 131.1 | 108.3 |
| Average | 100.0 | 111.2 | 129.0 | 128.2 | 134.2 | 122.6 |
| Standard deviation | 0.0 | 8.0 | 9.0 | 10.9 | 14.8 | 15.4 |

[Table 20]

| [Methionine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 107.3 | 111.0 | 127.2 | 142.1 | 141.4 |
| 12 | 100.0 | 100.9 | 109.5 | 97.8 | 119.1 | 112.7 |
| 13 | 100.0 | 100.4 | 113.3 | 118.4 | 121.4 | 120.6 |
| 14 | 100.0 | 105.0 | 123.0 | 142.5 | 166.0 | 134.5 |
| 15 | 100.0 | 96.1 | 103.2 | 99.3 | 104.9 | 107.3 |
| 16 | 100.0 | 98.2 | 124.7 | 123.7 | 155.2 | 106.2 |
| 17 | 100.0 | 99.1 | 109.4 | 118.9 | 122.1 | 116.9 |
| 18 | 100.0 | 98.3 | 107.9 | 134.1 | 135.8 | 123.4 |
| Average | 100.0 | 100.7 | 112.8 | 120.2 | 133.3 | 120.4 |
| Standard deviation | 0.0 | 3.5 | 7.0 | 14.6 | 19.1 | 11.7 |

[Table 21]

| [Cystine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 125.5 | 176.6 | 234.0 | 153.2 | 202.1 |
| 12 | 100.0 | 192.0 | 192.0 | 240.0 | 160.0 | 172.0 |
| 13 | 100.0 | 150.0 | 147.2 | 166.7 | 141.7 | 155.6 |
| 14 | 100.0 | 109.1 | 165.9 | 161.4 | 181.8 | 145.5 |
| 15 | 100.0 | 109.3 | 159.3 | 125.9 | 120.4 | 172.2 |

(continued)

| [Cystine] Example individual | Before feeding | 30 minutes after feeding | 1 hour after feeding | 2 hours after feeding | 4 hours after feeding | 6 hours after feeding |
|---|---|---|---|---|---|---|
| 16 | 100.0 | 165.8 | 186.8 | 218.4 | 215.8 | 134.2 |
| 17 | 100.0 | 110.4 | 180.2 | 115.1 | 121.7 | 86.8 |
| 18 | 100.0 | 72.0 | 98.7 | 88.0 | 126.7 | 102.7 |
| Average | 100.0 | 129.3 | 163.3 | 168.7 | 152.7 | 146.4 |
| Standard deviation | 0.0 | 35.6 | 28.1 | 53.7 | 31.0 | 35.6 |

[Table 22]

| [Cystine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 75.6 | 72.1 | 95.3 | 76.7 | 90.7 |
| 12 | 100.0 | 94.5 | 85.5 | 127.3 | 72.7 | 83.6 |
| 13 | 100.0 | 130.0 | 120.0 | 135.0 | 102.5 | 120.0 |
| 14 | 100.0 | 75.0 | 118.8 | 141.7 | 175.0 | 147.9 |
| 15 | 100.0 | 107.5 | 107.5 | 160.4 | 103.8 | 132.1 |
| 16 | 100.0 | 84.7 | 113.6 | 113.6 | 127.1 | 150.8 |
| 17 | 100.0 | 122.2 | 135.9 | 117.1 | 116.2 | 114.5 |
| 18 | 100.0 | 89.7 | 203.4 | 220.7 | 200.0 | 220.7 |
| Average | 100.0 | 97.4 | 119.6 | 138.9 | 121.8 | 132.5 |
| Standard deviation | 0.0 | 19.3 | 36.9 | 35.9 | 42.0 | 40.3 |

[Table 23]

| [Threonine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 110.9 | 124.1 | 123.0 | 114.7 | 146.2 |
| 12 | 100.0 | 111.7 | 117.6 | 130.4 | 114.9 | 111.0 |
| 13 | 100.0 | 99.7 | 145.8 | 136.3 | 140.3 | 157.3 |
| 14 | 100.0 | 130.2 | 144.8 | 168.0 | 220.0 | 176.2 |
| 15 | 100.0 | 98.7 | 126.7 | 117.2 | 112.4 | 89.4 |
| 16 | 100.0 | 105.0 | 127.9 | 119.9 | 116.6 | 95.7 |
| 17 | 100.0 | 95.1 | 124.7 | 116.8 | 109.2 | 78.6 |
| 18 | 100.0 | 113.0 | 138.6 | 149.9 | 171.0 | 128.5 |
| Average | 100.0 | 108.0 | 131.3 | 132.7 | 137.4 | 122.9 |
| Standard deviation | 0.0 | 10.4 | 9.7 | 17.0 | 36.8 | 32.7 |

[Table 24]

| [Threonine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 109.5 | 104.9 | 106.4 | 102.7 | 107.5 |
| 12 | 100.0 | 110.0 | 114.2 | 104.0 | 96.3 | 100.0 |

(continued)

| [Threonine] Comparative Example individual | Before feeding | 30 minutes after feeding | 1 hour after feeding | 2 hours after feeding | 4 hours after feeding | 6 hours after feeding |
|---|---|---|---|---|---|---|
| 13 | 100.0 | 88.9 | 100.4 | 114.1 | 118.6 | 97.3 |
| 14 | 100.0 | 89.3 | 109.0 | 138.6 | 146.9 | 124.4 |
| 15 | 100.0 | 105.6 | 114.6 | 116.0 | 124.8 | 119.1 |
| 16 | 100.0 | 96.0 | 109.4 | 109.5 | 108.1 | 82.1 |
| 17 | 100.0 | 107.9 | 113.3 | 109.0 | 99.8 | 101.5 |
| 18 | 100.0 | 91.1 | 100.3 | 126.4 | 129.8 | 98.9 |
| Average | 100.0 | 99.8 | 108.3 | 115.5 | 115.9 | 103.9 |
| Standard deviation | 0.0 | 8.8 | 5.5 | 10.9 | 16.3 | 12.4 |

[Table 25]

| [Phenylalanine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 96.9 | 123.5 | 157.6 | 162.4 | 158.4 |
| 12 | 100.0 | 116.1 | 149.5 | 176.4 | 155.3 | 131.2 |
| 13 | 100.0 | 87.1 | 115.5 | 119.7 | 116.9 | 115.1 |
| 14 | 100.0 | 127.5 | 165.4 | 180.2 | 185.5 | 142.9 |
| 15 | 100.0 | 110.0 | 130.7 | 129.7 | 127.8 | 102.5 |
| 16 | 100.0 | 108.0 | 148.8 | 136.7 | 160.4 | 108.5 |
| 17 | 100.0 | 108.9 | 130.0 | 140.7 | 134.3 | 107.6 |
| 18 | 100.0 | 120.5 | 147.6 | 157.9 | 166.3 | 123.0 |
| Average | 100.0 | 109.4 | 138.9 | 149.9 | 151.1 | 123.6 |
| deviation | 0.0 | 12.0 | 15.5 | 20.4 | 21.3 | 18.2 |

[Table 26]

| [Phenylalanine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 103.6 | 135.4 | 144.7 | 142.8 | 122.0 |
| 12 | 100.0 | 104.3 | 113.3 | 127.3 | 140.1 | 107.7 |
| 13 | 100.0 | 91.8 | 110.4 | 113.6 | 122.7 | 105.2 |
| 14 | 100.0 | 89.8 | 125.5 | 129.9 | 124.3 | 98.8 |
| 15 | 100.0 | 99.8 | 114.4 | 113.1 | 105.2 | 92.9 |
| 16 | 100.0 | 108.1 | 133.1 | 133.6 | 126.0 | 96. |
| 17 | 100.0 | 97.8 | 103.4 | 112.2 | 109.6 | 93.6 |
| 18 | 100.0 | 100.3 | 122.0 | 127.5 | 125.4 | 97.3 |
| Average | 100.0 | 99.4 | 119.7 | 125.2 | 124.5 | 101.8 |
| deviation | 0.0 | 5.8 | 10.5 | 10.8 | 12.1 | 9.0 |

[Table 27]

| [Tyrosine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 110.2 | 136.4 | 197.9 | 208.9 | 205.5 |
| 12 | 100.0 | 122.5 | 180.2 | 224.5 | 170.4 | 137.5 |
| 13 | 100.0 | 93.5 | 163.5 | 156.2 | 153.1 | 146.2 |
| 14 | 100.0 | 144.0 | 187.9 | 232.3 | 256.5 | 157.3 |
| 15 | 100.0 | 110.7 | 195.1 | 173.1 | 135.3 | 96.3 |
| 16 | 100.0 | 122.2 | 179.6 | 179.9 | 161.5 | 95.9 |
| 17 | 100.0 | 109.5 | 178.3 | 227.6 | 189.7 | 110.3 |
| 18 | 100.0 | 144.8 | 194.5 | 193.2 | 186.2 | 125.3 |
| Average | 100.0 | 119.7 | 176.9 | 198.1 | 182.7 | 134.3 |
| deviation | 0.0 | 16.6 | 18.0 | 26.2 | 35.2 | 34.2 |

[Table 28]

| [Tyrosine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 120.6 | 124.7 | 172.5 | 159.5 | 143.3 |
| 12 | 100.0 | 115.5 | 150.4 | 155.2 | 179.4 | 129.8 |
| 13 | 100.0 | 89.5 | 112.7 | 125.7 | 137.5 | 103.8 |
| 14 | 100.0 | 103.9 | 166.7 | 222.4 | 203.9 | 142.7 |
| 15 | 100.0 | 93.9 | 122.3 | 120.5 | 109.1 | 96.7 |
| 16 | 100.0 | 105.8 | 131.4 | 121.3 | 118.9 | 80.5 |
| 17 | 100.0 | 110.6 | 142.8 | 167.3 | 157.2 | 151.6 |
| 18 | 100.0 | 93.3 | 110.8 | 137.6 | 128.3 | 107.0 |
| Average | 100.0 | 104.2 | 132.7 | 152.8 | 149.2 | 119.4 |
| deviation | 0.0 | 10.5 | 18.1 | 32.5 | 29.9 | 24.2 |

[Table 29]

| [Tryptophan] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 132.8 | 145.9 | 183.1 | 174.7 | 181.3 |
| 12 | 100.0 | 130.5 | 154.8 | 147.2 | 147.5 | 132.0 |
| 13 | 100.0 | 113.6 | 138.2 | 133.7 | 150.4 | 138.9 |
| 14 | 100.0 | 125.3 | 155.5 | 163.0 | 175.6 | 132.3 |
| 15 | 100.0 | 114.2 | 138.8 | 145.9 | 134.2 | 107.1 |
| 16 | 100.0 | 118.0 | 132.7 | 144.0 | 126.0 | 94.5 |
| 17 | 100.0 | 130.4 | 170.1 | 194.9 | 200.9 | 115.6 |
| 18 | 100.0 | 109.6 | 133.1 | 146.6 | 157.2 | 127.9 |
| Average | 100.0 | 121.8 | 146.1 | 157.3 | 158.3 | 128.7 |

(continued)

| [Tryptophan] Example individual | Before feeding | 30 minutes after feeding | 1 hour after feeding | 2 hours after feeding | 4 hours after feeding | 6 hours after feeding |
|---|---|---|---|---|---|---|
| deviation | 0.0 | 8.5 | 12.3 | 20.0 | 22.9 | 24.2 |

[Table 30]

| [Tryptophan] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 115.3 | 111.8 | 130.2 | 115.5 | 124.4 |
| 12 | 100.0 | 113.1 | 111.9 | 113.9 | 131.4 | 105.6 |
| 13 | 100.0 | 117.7 | 125.5 | 129.4 | 141.4 | 108.8 |
| 14 | 100.0 | 116.0 | 137.8 | 152.1 | 151.4 | 128.4 |
| 15 | 100.0 | 109.8 | 120.1 | 123.4 | 116.5 | 106.9 |
| 16 | 100.0 | 117.3 | 134.2 | 139.1 | 141.0 | 99.9 |
| 17 | 100.0 | 122.0 | 149.8 | 150.9 | 144.9 | 137.2 |
| 18 | 100.0 | 104.8 | 115.1 | 123.3 | 105.4 | 96.2 |
| Average | 100.0 | 114.5 | 125.8 | 132.8 | 130.9 | 113.4 ' |
| deviation | 0.0 | 4.9 | 12.9 | 12.7 | 15.5 | 13.8 |

[Table 31]

| [Ornithine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 112.8 | 152.1 | 215.4 | 241.9 | 194.9 |
| 12 | 100.0 | 142.0 | 179.5 | 261.4 | 176.1 | 143.2 |
| 13 | 100.0 | 106.6 | 151.2 | 216.5 | 157.0 | 171.9 |
| 14 | 100.0 | 130.2 | 184.0 | 267.0 | 308.5 | 184.9 |
| 15 | 100.0 | 129.5 | 178.5 | 224.2 | 181.2 | 128.9 |
| 16 | 100.0 | 134.8 | 222.6 | 260.0 | 222.6 | 129.6 |
| 17 | 100.0 | 121.3 | 189.6 | 203.0 | 177.4 | 88.4 |
| 18 | 100.0 | 125.9 | 208.9 | 200.7 | 212.6 | 143.7 |
| Average | 100.0 | 125.4 | 183.3 | 231.0 | 209.7 | 148.2 |
| deviation | 0.0 | 10.8 | 23.1 | 25.6 | 45.7 | 32.5 |

[Table 32]

| [Ornithine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 119.0 | 140.1 | 159.2 | 157.7 | 136.6 |
| 12 | 100.0 | 130.4 | 140.9 | 176.5 | 164.3 | 122.6 |
| 13 | 100.0 | 102.5 | 150.4 | 183.5 | 176.0 | 114.0 |
| 14 | 100.0 | 87.8 | 143.1 | 262.6 | 229.3 | 130.1 |

(continued)

| [Ornithine] Comparative Example individual | Before feeding | 30 minutes after feeding | 1 hour after feeding | 2 hours after feeding | 4 hours after feeding | 6 hours after feeding |
|---|---|---|---|---|---|---|
| 15 | 100.0 | 114.5 | 147.6 | 179.3 | 160.0 | 131.7 |
| 16 | 100.0 | 96.6 | 150.0 | 179.7 | 170.3 | 110.2 |
| 17 | 100.0 | 125.4 | 168.6 | 199.4 | 157.4 | 117.2 |
| 18 | 100.0 | 99.4 | 140.9 | 211.0 | 138.3 | 105.8 |
| Average | 100.0 | 109.5 | 147.7 | 193.9 | 169.2 | 121.0 |
| deviation | 0.0 | 14.1 | 8.8 | 29.7 | 25.0 | 10.3 |

[Table 33]

| [Glutamine] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 98.3 | 119.5 | 122.5 | 123.8 | 132.9 |
| 12 | 100.0 | 99.5 | 106.9 | 100.3 | 99.9 | 109.6 |
| 13 | 100.0 | 97.6 | 126.4 | 121.0 | 117.9 | 123.8 |
| 14 | 100.0 | 92.9 | 97.7 | 98.6 | 108.7 | 110.6 |
| 15 | 100.0 | 97.2 | 109.1 | 93.1 | 94.7 | 95.6 |
| 16 | 100.0 | 105.8 | 117.8 | 116.6 | 124.8 | 106.4 |
| 17 | 100.0 | 101.2 | 119.4 | 101.7 | 96.8 | 94.6 |
| 18 | 100.0 | 96.6 | 113.0 | 96.7 | 98.2 | 97.7 |
| Average | 100.0 | 98.6 | 113.7 | 106.3 | 108.1 | 108.9 |
| deviation | 0.0 | 3.5 | 8.4 | 11.0 | 11.7 | 12.8 |

[Table 34]

| [Glutamine] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 105.5 | 104.8 | 105.6 | 99.0 | 93.2 |
| 12 | 100.0 | 99.8 | 95.9 | 93.5 | 84.0 | 87.8 |
| 13 | 100.0 | 100.1 | 99.8 | 104.1 | 96.4 | 95.2 |
| 14 | 100.0 | 94.9 | 95.4 | 97.7 | 100.9 | 101.4 |
| 15 | 100.0 | 93.6 | 91.7 | 82.5 | 86.5 | 93.6 |
| 16 | 100.0 | 94.2 | 107.8 | 101.9 | 108.3 | 95.0 |
| 17 | 100.0 | 91.2 | 90.4 | 86.4 | 78.3 | 84.3 |
| 18 | 100.0 | 88.3 | 99.4 | 109.1 | 105.9 | 105.2 |
| Average | 100.0 | 95.9 | 98.1 | 97.6 | 94.9 | 94.5 |
| Standard deviation | 0.0 | 5.2 | 5.6 | 8.8 | 10.1 | 6.3 |

[Table 35]

| [Essential amino acids] Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 106.0 | 127.2 | 145.6 | 151.0 | 164.5 |
| 12 | 100.0 | 116.6 | 141.0 | 153.6 | 132.9 | 121.1 |
| 13 | 100.0 | 90.8 | 131.0 | 118.0 | 129.5 | 132.0 |
| 14 | 100.0 | 122.7 | 142.4 | 159.4 | 199.7 | 140.9 |
| 15 | 100.0 | 101.4 | 129.5 | 128.2 | 121.7 | 92.5 |
| 16 | 100.0 | 111.5 | 145.8 | 151.1 | 143.1 | 102.1 |
| 17 | 100.0 | 106.0 | 144.9 | 144.8 | 135.2 | 94.9 |
| 18 | 100.0 | 123.7 | 151.2 | 161.7 | 169.3 | 119.4 |
| Average | 100.0 | 109.8 | 139.1 | 145.3 | 147.8 | 120.9 |
| Standard deviation | 0.0 | 10.4 | 8.2 | 14.2 | 23.9 | 23.1 |

Table 36]

| [Essential amino acids] Comparative Example individual | Before feeding | 30 minutes after feeding | 1 hour after feeding | 2 hours after feeding | 4 hours after feeding | 6 hours after feeding |
|---|---|---|---|---|---|---|
| 11 | 100.0 | 105.5 | 107.5 | 125.4 | 118.0 | 114.5 |
| 12 | 100.0 | 105.6 | 112.2 | 111.4 | 119.7 | 101.8 |
| 13 | 100.0 | 87.0 | 100.9 | 105.1 | 112.5 | 87.9 |
| 14 | 100.0 | 93.4 | 117.1 | 139.8 | 147.9 | 113.4 |
| 15 | 100.0 | 93.4 | 107.3 | 103.6 | 102.6 | 95.8 |
| 16 | 100.0 | 101.6 | 122.4 | 124.3 | 121.4 | 90.0 |
| 17 | 100.0 | 102.9 | 116.8 | 123.7 | 110.3 | 102.5 |
| 18 | 100.0 | 94.8 | 112.7 | 134.7 | 120.9 | 99.7 |
| Average | 100.0 | 98.0 | 112.1 | 121.0 | 119.2 | 100.7 |
| Standard deviation | 0.0 | 6.4 | 6.4 | 12.4 | 12.4 | 9.1 |

From the above results shown in Tables 7 to 36, it was found that the pet food of Example 2 makes it possible to supply a sufficient amount of an amino acid that serves as a material for muscle synthesis.

According to the present invention, a pet food capable of controlling body weight while diminishing loss of muscle mass and contains a basic ingredient as a plant-based protein source, can be provided.

Although preferable examples of the present invention have been described above, the present invention is not limited to these examples.

[Industrial applicability]

According to the present invention, a pet food capable of controlling body weight while diminishing loss of muscle mass and contains a basic ingredient as a plant-based protein source, can be provided.

**Claims**

1. A pet food for weight control that is used for controlling body weight while diminishing loss of muscle mass,

wherein a mass of a trypsin inhibitor is 1.3 TIU/mg or less in terms of dry matter with respect to the total mass of the pet food and a water content is less than 25%, and
with respect to a total mass of the pet food, a protein content is 20 mass% or more in terms of dry matter and an isolated soybean protein content is 5 to 30 mass% in terms of dry matter.

2. The pet food according to claim 1, wherein a lipid content is 5.5 to 30.0 mass% in terms of dry matter with respect to the total mass of the pet food.

**Patentansprüche**

1. Haustierfutter zur Gewichtsregulierung, das zur Regulierung von Körpergewicht bei Verringerung von Verlust von Muskelmasse verwendet wird,

wobei eine Masse eines Trypsin-Inhibitors 1,3 TIE/mg oder weniger bezüglich Trockenmasse in Bezug auf die Gesamtmasse des Haustierfutters beträgt und ein Wassergehalt weniger als 25 % beträgt, und
in Bezug auf eine Gesamtmasse des Haustierfutters ein Proteingehalt 20 Masse-% oder mehr bezüglich Trockenmasse beträgt und ein Gehalt von isoliertem Sojaprotein 5 bis 30 Masse-% bezüglich Trockenmasse beträgt.

2. Haustierfutter nach Anspruch 1, wobei ein Fettgehalt 5,5 bis 30,0 Masse-% bezüglich Trockenmasse in Bezug auf die Gesamtmasse des Haustierfutters beträgt.

**Revendications**

1. Aliment pour le contrôle du poids chez les animaux de compagnie, qui est utilisé pour contrôler le poids corporel tout en réduisant la perte de masse musculaire,

où, rapportées à la masse totale de l'aliment pour animaux de compagnie, la teneur en un inhibiteur de trypsine est inférieure ou égale à 1,3 UTI/mg de masse de matière sèche et la teneur en eau est inférieure à 25 % et rapportées à la masse totale de l'aliment pour animaux de compagnie, une teneur en protéines est égale ou supérieure à 20 % en masse de matière sèche et une teneur en un isolat protéique de soja va de 5 à 30 % en masse de matière sèche.

2. Aliment pour animaux de compagnie selon la revendication 1 où, rapportée à la masse totale de l'aliment pour animaux de compagnie, la teneur en lipides va de 5,5 à 30,0 % en masse de matière sèche.

## FIG. 1

[VALINE]

## FIG. 2

[LEUCINE]

FIG. 3

FIG. 4

# FIG. 5

# FIG. 6

## FIG. 7

[METHIONINE]

Y-axis: 0.0, 20.0, 40.0, 60.0, 80.0, 100.0, 120.0, 140.0, 160.0

X-axis: BEFORE MEEL, 30 MINUTES AFTER MEEL, 1 HOUR AFTER MEEL, 2 HOURS AFTER MEEL, 4 HOURS AFTER MEEL, 6 HOURS AFTER MEEL

## FIG. 8

[CYSTINE]

Y-axis: 0.0, 20.0, 40.0, 60.0, 80.0, 100.0, 120.0, 140.0, 160.0, 180.0

X-axis: BEFORE MEEL, 30 MINUTES AFTER MEEL, 1 HOUR AFTER MEEL, 2 HOURS AFTER MEEL, 4 HOURS AFTER MEEL, 6 HOURS AFTER MEEL

## FIG. 9

[THREONINE]

Graph showing values from 0.0 to 160.0 on the Y-axis, with X-axis categories: BEFORE MEEL, 30 MINUTES AFTER MEEL, 1 HOUR AFTER MEEL, 2 HOURS AFTER MEEL, 4 HOURS AFTER MEEL, 6 HOURS AFTER MEEL

## FIG. 10

[PHENYLALANINE]

Graph showing values from 0.0 to 160.0 on the Y-axis, with X-axis categories: BEFORE MEEL, 30 MINUTES AFTER MEEL, 1 HOUR AFTER MEEL, 2 HOURS AFTER MEEL, 4 HOURS AFTER MEEL, 6 HOURS AFTER MEEL

32

# FIG. 11

# FIG. 12

FIG. 13

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016052287 A
- JP 2005040059 A
- US 2012028891 A1

**Non-patent literature cited in the description**

- **AOYAMA T et al.** SOY PROTEIN ISOLATE AND ITS HYDROLYSATE REDUCE BODY FAT OF DIETARY OBESE RATS AND GENETICALLY OBESE MICE (YELLOW KK). *NUTRITION*, 01 May 2000, vol. 16 (5), ISSN 0899-9007, 349-354
- **REEVES PHILIP G et al.** AIN-93 purified diets lor laboratory rodents: Final report of the American Institute of Nutrition ad hoc writing committee on the reformulation of the AIN-76A rodent diet. *THE JOURNAL OF NUTRITION*, 01 January 1993, vol. 123 (11), ISSN 0022-3166, 1939-1951
- **NIKAWA TAKESHI et al.** Effects of a Soy Protein Diet on Exercise-Induced Muscle Protein Catabolism in Rats. *Nutrition*, 01 June 2002, vol. 18, 490-495
- **KAZUHLSA et al.** Comparative Effect of Isolated Soybean Protein and Casein on Body Fat Deposition in Chicks. *JPN. POULT. SCI*, 01 January 2000, vol. 37, 365-371
- **TOMOTADA ONO** ; **MAKOTO SHIMOYAMADA** ; **KOJI MURAMOTO**. *Function and Science of Soybeans*, 2012, 31
- Small Animal Clinical Nutrition. Mark Morris Associates, 2014, 209-215